# EUROPÄISCHE PATENTSCHRIFT

(11) **EP 3 756 052 B1**
(45) Veröffentlichungstag und Bekanntmachung des Hinweises auf die Patenterteilung: **15.06.2022**
(21) Anmeldenummer: 19706269.8
(22) Anmeldetag: 20.02.2019
(51) Int. Cl.: G05B 19/042, G05B 9/02, G05B 23/02

(54) **ÜBERWACHUNGSSYSTEM FÜR EINE SCHUTZEINRICHTUNG UND SCHUTZEINRICHTUNG**
MONITORING SYSTEM FOR A PROTECTIVE DEVICE AND PROTECTIVE DEVICE
SYSTÈME DE SURVEILLANCE POUR UN DISPOSITIF DE PROTECTION ET DISPOSITIF DE PROTECTION

(30) Priorität: 20.02.2018 DE 102018103772
(43) Veröffentlichungstag der Anmeldung: 30.12.2020
(73) Patentinhaber: Dekra Exam GmbH, 44809 Bochum (DE); DEKRA e.V., 70565 Stuttgart (DE)
(72) Erfinder: KÖTTING, Jens, 45966 Gladbeck (DE); WARDASCHKA, André, 40472 Düsseldorf (DE)
(74) Vertreter: Spachmann, Holger
(86) Internationale Anmeldenummer: PCT/EP2019/054143
(87) Internationale Veröffentlichungsnummer: WO 2019/162290

(56) Entgegenhaltungen:
- EP-A1- 3 252 550
- WO-A1-2014/124683
- US-A1- 2004 243 260

## Beschreibung

Die vorliegende Erfindung betrifft ein Überwachungssystem für eine sicherheitsgerichtete, mindestens ein, bevorzugt mehrere Sicherheitsbauteile umfassende Schutzeinrichtung, wobei die Sicherheitsbauteile zumindest einen zum Erzeugen von jeweiligen Sensorsignalen eingerichteten Überwachungssensor und eine mit dem zumindest einen Überwachungssensor verbundene Sicherheitssteuerung umfasst, wobei die Sicherheitssteuerung zum Empfangen und Auswerten der Sensorsignale und zum Erzeugen und Ausgeben von Sicherheitsschaltbefehlen auf der Grundlage der Sensorsignale eingerichtet ist.

### STAND DER TECHNIK

Insbesondere mit der zunehmenden Automatisierung von Fertigungsprozessen gewinnen Schutzeinrichtungen nach den Prinzipien der Funktionalen Sicherheit zunehmend an Bedeutung. Die Systeme, Anlagen, Maschinen oder Roboter, die an der Durchführung dieser Prozesse beteiligt sind, stellen in der Regel ein erhebliches Gefährdungspotenzial für das Bedienpersonal dar, sodass sichergestellt werden muss, dass beispielsweise Personen nicht in eine durch den Arbeitsbereich einer Maschine oder eines Roboters definierte Gefährdungszone eindringen kann, ohne eine Sicherheitsfunktion, z.B. eine Schutzabschaltung der Maschine oder des Roboters, auszulösen, oder ein unkontrolliertes Verhalten eines Fahrzeugs durch ungewolltes Auslösen von Bremse oder unkontrollierte Beschleunigung oder Lenkverhalten auftritt.

Eine hier zu betrachtende Schutzeinrichtung im Sinne der Erfindung dient dem Schutz von Personen, der Umwelt oder einer Sicherheitsüberwachung eines Systems, einer Anlage oder Maschine und kann z.B. optische Sensoren wie Lichtschranken, Näherungssensoren, Geschwindigkeits- oder Beschleunigungssensoren, Türschalter, Positionssensoren oder dergleichen umfassen. Derartige Schutzeinrichtungen werden regelmäßig unter dem Aspekt der Funktionalen Sicherheit von Prüfdienstleistern zertifiziert bzw. baumustergeprüft, was sich beispielsweise aus berufsgenossenschaftlichen Vorgaben, aus Normen wie ISO 26262, IEC 61508, DIN EN 62061, DIN EN ISO 13849 oder z.B. der Maschinenrichtlinie 2006/42/EG D der EU im Stand Januar 2019 ergibt.

Schutzeinrichtungen nach den Prinzipien der Funktionalen Sicherheit (FS) schützen Menschen und Umwelt vor Fehlfunktionen von sicherheitskritischen Anlagen, Maschinen oder Systemen und umfassen regelmäßig Sicherheitsbauteile wie Überwachungssensoren, eine Sicherheitssteuerung sowie ggf. Aktoren. Es sind auch Schutzeinrichtungen denkbar, bei denen auf eine explizite Sicherheitssteuerung oder ein Aktor verzichtet werden kann, z.B. akustische Alarmeinrichtungen einer Brandmeldereinrichtung mit Rauchdetektoren. Diese werden je nach Abstraktionsebene auf Input - Logik - Output aufgeteilt.

So weist eine Schutzeinrichtung in der Regel zumindest einen Überwachungssensor auf, der an eine zentrale Sicherheitssteuerung meldet, die daraufhin einen Aktor schaltet. Der Überwachungssensor wiederum hat jedoch selber einen Input (Sensorelement), eine Logik (Verarbeitung des Sensorsignals) sowie einen Output (Meldung an die Sicherheitssteuerung über z.B. PNP-Ausgang). Dies ist von Interesse z.B. bei einer Prüfung der Sicherheitsbauteile wie des Überwachungssensors. Sicherheitssteuerung und Aktorik können auch in Input-Logic-Output Teilelemente aufgeteilt werden.

Es ist eine Abstraktionsebene zu definieren, die betrachtet werden soll: Wird ein Sicherheitsbauteil geprüft, so wird dieses in Input-Logic-Output aufgeteilt. Wird ein Gesamtsystem geprüft, so betrachtet man in der Regel ein Sicherheitsbauteil für Input(Sensor)-Logic(Steuerung)-Output(Aktor). Aufgrund dieser vielen Teilschnittstellen können Fehlfunktionen in nur einem Teil Auswirkungen auf das darüber geordnete Ganze haben. Die Funktionale Sicherheit kümmert sich hierbei um zufällige (z.B. Bauteilversagen durch Alterung) und systematische (z.B. Designfehler) Ausfälle, die ungewollt in einer Schutzeinrichtung oder eines durch die Schutzreinrichtung abgesichertes System, Anlage oder Maschine auftreten. Das Prinzip der Funktionalen Sicherheit überwacht und schützt das System sozusagen vor Fehlern, die im Inneren des Systems auftreten sowie bei vorhersehbarer Fehlanwendung.

Eine bewusste Manipulation oder ein gezielter Angriff von außen sind normalerweise nicht im Anwendungsbereich der Funktionalen Sicherheit vorgesehen und werden daher von ihr auch nicht bzw. nur stiefmütterlich behandelt. Es gibt Vorgaben, die eine Berücksichtigung von "böswilliger oder nicht autorisierter Handlung" einfordern, dies beschränkt sich meist darauf, die Schutzeinrichtung oder eine darin befindliche Sicherheitssteuerung mit einem Passwort zu versehen. Für alle darüber hinausgehende Schutzmaßnahmen gegen insbesondere informationstechnische nichtautorisierte Handlungen wird auf die Cyber Security verwiesen.

Wird ein Fehler in der Schutzeinrichtung oder dem hierdurch abgesicherten System/Anlage/Maschine erkannt, wird ein vorher definierter sicherer Zustand hergestellt. Dies kann z.B. das Abschalten eines Antriebes sein.

Zur Überwachung von Gefährdungs- oder Überwachungsbereichen werden beispielsweise optoelektronische Sensoren als Überwachungssensoren vorgesehen. Wenn durch einen oder mehrere Überwachungssensoren ein sicherheitskritisches Eindringen in den Gefährdungs- oder Überwachungsbereich festgestellt wurde, werden entsprechende Sensorsignale an die Sicherheitssteuerung übermittelt. Die Sicherheitssteuerung wertet diese Befehle aus und erzeugt einen oder mehrere geeignete Sicherheitsschaltbefehle, die an Befehlsausgängen der Sicherheitssteuerung ausgegeben werden. Diese Sicherheitsschaltbefehle können von Aktoren empfangen werden, die mit der Sicherheitssteuerung verbunden sind. Ein Beispiel für ein derartiges Sensorsignal ist ein sogenannter OSSD-Ausgang (Output Signal Switching Device), welcher vereinfacht gesagt ein Leistungsschaltbauteil wie ein Relais, ein Schütz oder ein Leistungshalbleiterschalter darstellt, welches zum Abschalten oder Deaktivieren einer damit verbundenen Maschine vorgesehen ist. Häufig sind diese Ausgänge, insbesondere OSSD-Ausgänge, bereits in die Sicherheitssensoren integriert.

Darüber hinaus können ähnliche Schutzeinrichtungen auch bei vielen anderen Anwendungen eingesetzt werden, zum Beispiel zur Überwachung von thermodynamischen Prozessen, bei denen zum Beispiel Messgrößen wie etwa Temperaturen, Drücke oder Konzentrationen bestimmter Stoffe in Stoffgemischen auf Einhaltung bestimmter Grenzwerte überwacht werden müssen, um einen ordnungsgemäßen Ablauf der Prozesse zu gewährleisten und insbesondere zu verhindern, dass eine Abweichung der zu überwachenden Parameter von zulässigen Werten zu Havarien führt, welche ein erhebliches Schad- oder Gefährdungspotenzial in sich tragen können. Nur beispielhaft seien hier Anlagen der chemischen Industrie, konventionelle Kraftwerke oder auch Atomkraftwerke genannt.

An in sicherheitskritischen Systemen eingesetzte Schutzeinrichtungen werden hohe Anforderungen in Bezug auf Sicherheit und Verfügbarkeit gestellt. Dies betrifft sowohl die Gewährleistung der Sicherheit des von der Schutzeinrichtung überwachten Systems gegenüber Ausfällen oder Defekten einzelner Sicherheitsbauteile als auch die Sicherheit gegenüber Manipulationen. Während beispielsweise eine Überwachung der Überwachungssensoren auf Funktion in einem gewissen Maß auch durch die Sicherheitssteuerung erfolgen kann, beispielsweise durch Überwachung einer vom Sensor bereitgestellten Spannung oder eines Stromes, ist eine Überwachung der Schutzeinrichtung auf mögliche vorsätzliche Manipulationen durch Bedienpersonen oftmals wesentlich aufwändiger.

So sind beispielsweise bei Werkzeugmaschinen häufig Abdeckungen vorgesehen, die nur in ihrem geschlossenen Zustand einen Betrieb der geschützten Werkzeugmaschine erlauben. Bei Störungen oder Wartungsarbeiten versuchen Bedienpersonen aus Gründen einer vermeintlichen Arbeitserleichterung oftmals, die Wirkung der Schutzeinrichtung dahingehend zu manipulieren, dass ein Betrieb der Werkzeugmaschine auch bei geöffneter Abdeckung möglich ist. Beispielsweise wird ein magnetischer Überwachungssensor, welcher zur Überwachung der Schließposition der Abdeckung vorgesehen ist, von der Sicherheitssteuerung abgeklemmt und anstelle des Überwachungssensors ein Dauersignal an die Sicherheitssteuerung angeschlossen, welches die korrekte Schließstellung der Abdeckung unabhängig von ihrer tatsächlichen Position simuliert. Da dann auch ein Betrieb der Werkzeugmaschine bei offener Abdeckung möglich ist, können die Bedienperson oder andere, insbesondere auch unbeteiligte Personen, die von der Manipulation keine Kenntnis haben, erheblichen Gefahren ausgesetzt sein. Auch andere Sicherheitsbauteile können ein Ziel von Manipulationsversuchen oder Austausch durch Plagiate sein.

Auch ist bei einer weiter fortschreitenden Entwicklung zu einer Machine-Human-Interaction, wie sie insbesondere in der Industrie 4.0 Konzeption angestrebt wird, vielfältige Distanz-und Überwachungssensorik zum Schutz eines Menschen bei einer koordinierten Zusammenarbeit mit einer Maschine, insbes. einem Roboter vorgesehen, deren korrekte und vertrauensvolle Funktion Voraussetzung für eine störungs- und unfallfreie Kooperation und für die prüftechnische Zulassung derartiger Arbeitssituationen ist.

Nach dem Prinzip der Funktionalen Sicherheit gibt es verschiedene Architekturen, um der Schutzaufgabe gerecht zu werden. Im Normalfall wird ein einkanaliges System mit Diagnose verwendet, das als sog. 1oo1 D-System bezeichnet wird, und das einen Überwachungssensor, eine Sicherheitssteuerung und einen Aktor umfassen kann. Hierbei dient eine Diagnose i.d.R. nur der Funktionalen Sicherheit (FS) und überwacht die bestimmungsgemäße Verwendung sowie die vorhersehbare Fehlanwendung des Systems / Anlage / Maschine. Eine Manipulation am Überwachungssensor, so dass dieser falsche Werte ausgibt, eine Manipulation der Übertragung des Sensorwertes zur Sicherheitssteuerung, ein Eingriff in die Sicherheitssteuerung z.B. durch Manipulation von Speicherinhalten oder eine Korruption (Manipulation, unerwünschte Änderung missbräuchliche Verwendung) der Aktorsteuerung, z.B. Festsetzung von Schützen oder Relais kann sehr einfach die funktionale Sicherheitsfunktion eines derartigen 1oo1 D-System außer Betrieb setzen. Daneben sind z.B. zweikanalige 1oo2D-Systeme mit redundanten, parallelen Überwachungssensoren und Sicherheitssteuerungen bekannt, in der ein Hackerangriff eben in beiden Kanälen parallel oder sequentiell erfolgen kann, so dass auch hier eine Funktionale Sicherheit bei Manipulation von außen ausgehebelt werden kann.

Ein Hackerangriff, abgekürzt Hack bedeutet ein unerlaubtes Eindringen in eine Schutzeinrichtung einer sicherheitskritischen Anlage, eines Systems oder einer Maschine, z.B. durch Dateneingriff in ein Sicherheitsbauteil, in das die Sicherheitsbauteil und die Sicherheitssteuerung verbindende Datennetzwerk oder in die Sicherheitssteuerung an sich, meist unter Ausnutzung von Lücken der Cyber-Security.

Unter Cyber-Security (CS) versteht man den Schutz gegen einen nicht autorisierten Zugriff auf Dienste oder Informationen einer Komponente oder Systems über eine Kommunikations-Schnittstelle. Der Zugriff erfolgt hierbei in der Regel gezielt unter Ausnutzung von Schwächen in Hard- bzw. Software. Da es sich bei dem Zugriffsversuch um eine gezielte Aktion weit über das Maß einer vorhersehbaren Fehlanwendung hinaus handelt, spricht man hier auch von einem Angriff. Im Gegensatz zur Funktionalen Sicherheit liegt der Fokus bei Cyber-Security daher auf dem Schutz vor bewusster Umgehung von Autorisierungsmechanismen, um auf Informationen oder Dienste zugreifen oder eben diese manipulieren zu können. Als technische Maßnahme wird hierbei unter anderem auf kryptografische Verfahren zurückgegriffen, um z.B. die Kommunikation vor unerlaubter Manipulation oder Verletzung der Vertraulichkeit zu schützen. Cyber-Security schützt hierbei das System vor den (angreifenden) Menschen - Funktionale Sicherheit schützt hingegen den Menschen vor dem technischen System.

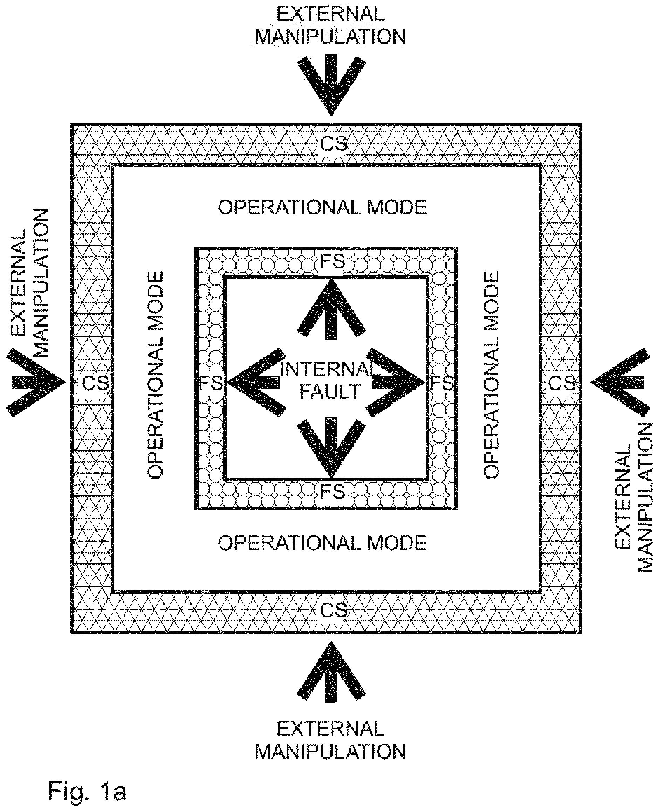

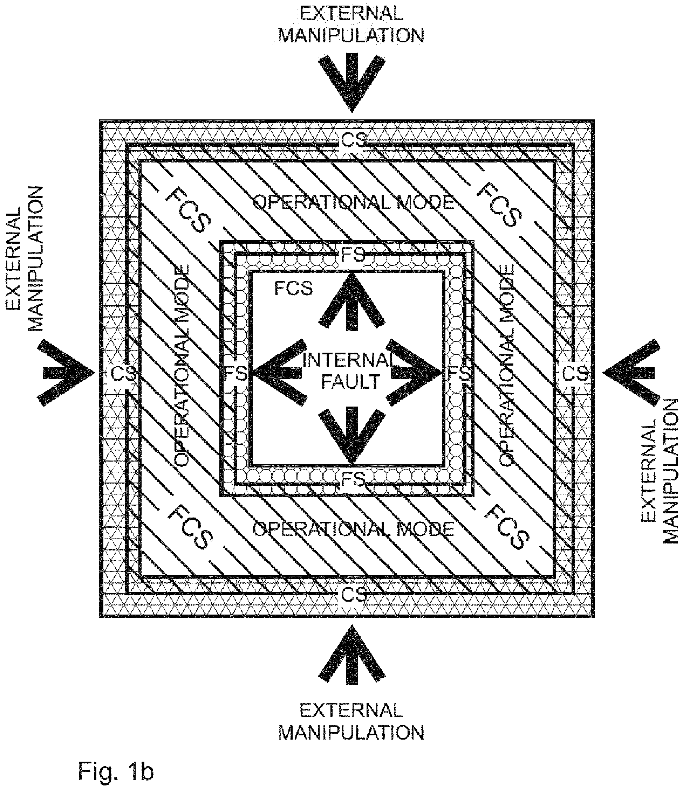

In der Fig. 1 ist abstrakt das Wechselspiel zwischen Funktionaler Sicherheit (FS), die eine bestimmungsgemäßen Arbeitsfunktion ("Operational Mode") einer Schutzeinrichtung durch Fehler, Ausfälle von innen schützt, und einer Cyber-Security-Überwachungsschicht, die einen Angriff auf den Operational Mode der Schutzeinrichtung von außen verhindern soll - z.B. durch Passwortschutz, Datenverschlüsselung, Signatur oder ähnliches. Allerdings kann die Cyber-Security nicht auf die Funktion der Schutzeinrichtung zugreifen oder deren Integrität (Unversehrtheit, Reinheit, Unbescholtenheit, Verhinderung unautorisierter Modifikation von Informationen) gegenüber äußeren Angriffen überprüfen. Sobald ein Angriff erfolgreich ist, kann weder die Cyber-Security noch die Funktionale Sicherheit eine sicherheitsrelevante Aufrechterhaltung des Operational Modes garantieren.

Ein erfolgreicher Hackerangriff auf ein System der Funktionalen Sicherheit ist immer möglich. Einer der Hauptgründe hierfür ist, dass die CS - im Gegensatz zur FS - eine regelmäßige Aktualisierung der Systeme benötigt. Eine Aktualisierung ist aber nicht immer möglich. Gründe können sein, dass Patches (Behebung von Sicherheitslücken) bereitgestellt und ständig überarbeitet werden müssen. Gerade im Hinblick auf bei sogar aktuellen Smartphones, Tablets und Wearables sind Hersteller nicht immer bereit, einen zeitlichen und finanziellen Aufwand zur Patchpflege zu leisten. Daneben müssen bereitgestellte Patches eingespielt werden: Fehlende Internetverbindungen oder Unwissenheit der Anwender können dies zuweilen zeitlich verzögern oder gänzlich verhindern. Auch wird in manchen Fällen bewusst auf eine Aktualisierung verzichtet, um z.B. bei laufenden Produktionssystemen eine Verfügbarkeit nicht zu gefährden und neue Fehler einzubauen. Auch können Patches bei älterer Hardware zu Performanceverlusten führen. Manchmal können Patches aber auch nicht oder nur unzureichend zur Verfügung gestellt werden. Dies ist zumeist der Fall, wenn die CS in Hardware umgesetzt wurde; z.B. bei µP (Thema Spectre, Meltdown) oder ASICs.

Sollte nun ein erfolgreicher Angriff auf ein System der Funktionalen Sicherheit stattfinden, kann weder ein Versagen der CS noch der FS attestiert werden. So kann durch vorgenannte ungenügende Patchpflege die CS eine Manipulation nicht verhindern, und die FS kennt keine Mechanismen, eine Korruption durch einen Hackerangriff oder eine Manipulation festzustellen.

Die WO2018/011802 beschreibt ein Sicherheitsdatenmonitorsystem für eine Fabrik oder eine Anlage. Das System umfasst mehrere "collector hosts", die mit externen Datenquellen verbunden sind. Ferner ist eine Vielzahl von "inspector hosts" vorgesehen, wobei die "inspector hosts" die "collector clusters" überwachen und die dabei gewonnenen Daten zur weiteren Analyse an andere "inspector hosts" übermitteln. Die Kommunikation und insbesondere auch eine Protokollierung erfolgt mithilfe einer verteilten Blockchain-Datenstruktur, wobei zur Prüfung der Integrität der Daten Hashwerte herangezogen werden. Die "Blockchain" wird auch als "knowledgebase" bezeichnet. Insofern wird eine Protokollierung eines Zustands und Zustandsänderungen einer Anlage beschrieben, so dass eine Protokollierung innere Abläufe und Zustände einer industriellen Anlage möglich ist. Jedoch fehlt jeglicher Schutz eines Sicherheitsüberwachungssystems gegenüber gezielter Manipulation und es werden keine Maßnahmen zur Abwehr eines Angriffs auf sicherheitsrelevante Komponenten und zum Schutz von Menschen und Umwelt getroffen. Der Aspekt einer auf funktionale Sicherheit gerichtete Schutzeinrichtung fehlt gänzlich, auch werden keine Vorschläge zur konsistenten Überwachung einer Schutzeinrichtung und Überführung der Anlage im Fehlerfall im Sinne des Erfindungskontextes gemacht.

Die EP 3 252 550 A1 beschreibt eine Steuerung mit einem internen Controller zur Steuerung einer Anlage, welche über einen Feldbus mit dem Controller verbunden ist. Der Controller ist über einen Sicherheitsdatenbus mit einem Sicherheitsmodul verbunden, welches beispielsweise einen Schlüssel enthalten kann, welcher über den Sicherheitsdatenbus gesendet wird, um in dem Sicherheitsmodul zur Verschlüsselung der an die Anlage gesendeten Daten verwendet zu werden. Alternativ kann auch die gesamte Verschlüsselung in dem Sicherheitsmodul erfolgen.

Die US 2004/243 260 A1 befasst sich mit einem Prozesssteuerungssystem für eine Prozessanlage, bei dem in redundanter Weise zwei Knoten vorgesehen sind, welche sowohl zwei Prozesssteuerungssysteme als auch zwei Sicherheitssysteme umfassen, welche mit unterschiedlicher Hardware aufgebaut sind. Mit diesem System soll verhindert werden, dass eine versehentliche oder unautorisierte Veränderung der Steuerungssoftware zu unerwünschten Betriebszuständen der Anlage führt.

Die WO 2014/124 683 A1 befasst sich mit einem System zur Überwachung von Betriebsbedingungen in einem Netzwerk von verteilten Geräten, insbesondere einem Netzwerk von Windkraftanlagen. Mittels eines mobilen Kommunikationsgeräts (Tablet, Smartphone oder Notebook) kann ein Servicetechniker mit einer Überwachungseinheit kommunizieren, welche in der Triebwerksgondel installiert ist. Über einen zentralen Server sind mehrere Windräder miteinander vernetzt, sodass ein Servicetechniker nach Scannen eines Barcodes Zugang zu Wartungsinformationen bekommt.

Es ist daher die Aufgabe der vorliegenden Erfindung, ein Überwachungssystem sowie eine Schutzeinrichtung mit einem Überwachungssystem anzugeben, welche eine hohe Sicherheit gegenüber Ausfall und/oder Manipulation von einem oder mehreren Sicherheitsbauteilen der Schutzeinrichtung gewährleisten.

### OFFENBARUNG DER ERFINDUNG

Die Lösung der Aufgabe erfolgt durch ein Überwachungssystem sowie durch eine Schutzeinrichtung mit den Merkmalen der unabhängigen Ansprüche. Vorteilhafte Ausführungsformen der Erfindung sind Gegenstand von Unteransprüchen. Dieses Konzept soll im Folgenden als FCS-Konzept (Funktionale Cyber Sicherheit - Functional Cyber Safety) bezeichnet werden, demzufolge ein FCS-Überwachungssystem zur Überwachung der Integrität einer FCS-Schutzreinrichtung.

Es wird vorgeschlagen, dass das Überwachungssystem zumindest eine Überwachungseinheit, welche mit zumindest einem jeweiligen Sicherheitsbauteil verbunden ist und zum Überwachen eines Zustands des Sicherheitsbauteils eingerichtet ist, und eine Zentraleinheit als Komponenten umfasst, wobei die zumindest eine Überwachungseinheit und die Zentraleinheit mittels eines Kommunikationsnetzwerks zum Austausch von Nachrichten, das sogenannte FCS-Netzwerk beinhalten, untereinander verbunden sind, wobei das Kommunikationsnetzwerk zum Bereitstellen eines Überwachungsprotokolls eingerichtet ist, und wobei mittels des Überwachungsprotokolls auf der Grundlage der in den ausgetauschten Nachrichten enthaltenen FCS-Diagnosen zumindest ein jeweiliger Zustand eines Sicherheitsbauteils und/oder einer Komponente des Überwachungssystems auf Übereinstimmung oder Abweichung von einem zugeordneten Sollzustand und/oder fälschungssicheren Identität überprüfbar ist.

Mit anderen Worten sind alle oder zumindest ein Teil der Sicherheitsbauteile der Schutzeinrichtung mit einer jeweiligen Überwachungseinheit verbunden. Durch ein Zusammenwirken der Komponenten des Überwachungssystems können somit ein oder mehrere Zustände der angekoppelten Sicherheitsbauteile bzw. von Komponenten des Überwachungssystems überprüft werden. Unter dem Begriff "Zustand" werden in diesem Zusammenhang insbesondere ein oder mehrere Parameter und/oder Eigenschaften verstanden, die für ein jeweiliges Sicherheitsbauteil bzw. eine jeweilige Komponente des Überwachungssystems charakteristisch sind. Die Überprüfung von Zuständen kann sich also insbesondere auf Zustände eines mit einer jeweiligen Überwachungseinheit verbundenen Sicherheitsbauteils, auf Zustände der mit einem Sicherheitsbauteil verbundenen Überwachungseinheit und auch auf Zustände der Zentraleinheit beziehen. Für die zu überprüfenden oder zu überwachenden Sicherheitsbauteile, Überwachungseinheiten oder Zentraleinheiten wird nachfolgend auch synonym der zusammenfassende Begriff "Bauteil" verwendet.

Es versteht sich von selbst, dass innerhalb der Schutzeinrichtung der oder die Überwachungssensoren, die Sicherheitssteuerung und ein oder mehrere zu schaltende Aktoren als funktionale Komponenten zu verstehen sind, wobei diese gerätetechnisch zumindest teilweise strukturell in einem Bauteil zusammengefasst sein können.

Bei einem Zustand kann es sich beispielsweise um einen Bauteilsignalisierungszustand handeln, etwa einen durch ein ausgegebenes Sensorsignal repräsentierten Sensorzustand eines Überwachungssensors oder einen durch einen ausgegebenen Sicherheitsschaltbefehl repräsentierten Schaltzustand der Sicherheitssteuerung. Weiterhin kann ein Zustand die Funktionsfähigkeit eines Sicherheitsbauteils repräsentieren, wobei zu diesem Zweck eine gegebenenfalls vorhandene Selbstdiagnostik des betreffenden Sicherheitsbauteils zugrunde gelegt wird oder die Überwachungseinheit über eigene Diagnostikmittel verfügt, um die Funktionstüchtigkeit des verbundenen Sicherheitsbauteils zu überprüfen.

Ein weiteres Beispiel für einen zu überprüfenden Zustand kann die Integrität eines überwachten Bauteils betreffen. Eine Integritätsprüfung kann sich beispielsweise auf eine eindeutige Identifikation eines Bauteils, beispielsweise eine eindeutige Seriennummer des betreffenden Bauteils beziehen. Als weiterer Zustand kann beispielsweise auch die Echtheit eines Bauteils überprüft werden, sodass ermittelt werden kann, ob es sich bei dem betreffenden Bauteil um ein Originalbauteil des Herstellers oder um eine Produktfälschung handelt. Noch ein weiteres Beispiel für einen zu prüfenden Zustand ist die Systemzugehörigkeit des Bauteils, worunter insbesondere verstanden wird, ob das Sicherheitsbauteil bzw. die mit dem Sicherheitsbauteil verbundene Überwachungseinheit als eine zulässige Komponente des Überwachungssystems identifiziert werden kann.

Die innerhalb des Kommunikationsnetzwerks ausgetauschten Nachrichten und darin enthaltenen FCS-Diagnosen sind insbesondere verschieden von den insbesondere sicherheitsrelevanten Signalisierungen, wie Sensorsignale oder Sicherheitsschaltbefehle, die zwischen den Überwachungssensoren, der Sicherheitssteuerung und gegebenenfalls vorhandenen Aktoren übermittelt werden.

Eine zu überwachende Schutzeinrichtung kann zusätzlich zu der Sicherheitssteuerung und dem zumindest einen Überwachungssensor zumindest einen mit der Sicherheitssteuerung verbundenen, zum Empfangen der Sicherheitsschaltbefehle eingerichteten Aktor umfassen, z.B. ein Schütz oder Relais zum An- oder Abschalten einer mit der Schutzeinrichtungen verbundenen Maschine oder eine Steuervorrichtung, die insbesondere sicherheitsrelevante Vorgänge steuern kann, insbesondere diese Vorgänge starten, fortsetzen oder beenden kann.

Die Komponenten der Schutzeinrichtung können direkt untereinander verdrahtet aber auch drahtlos über eine Luftschnittstelle wie Funknetzwerk oder optisch verbunden sein oder über ein Kommunikationsnetzwerk wie z.B. Bussystem, beispielsweise ein Feldbussystem wie CAN-Bus, I²C-Bus oder dergleichen, miteinander verbunden sein.

Bei dem Kommunikationsnetzwerk kann es sich beispielsweise um ein Bussystem oder ein Peer-to-Peer-Netzwerk handeln, wobei die Überwachungseinheiten mit der Zentraleinheit und insbesondere auch untereinander bidirektional kommunizieren können.

Das genannte Kommunikationsnetzwerk kann ein separates oder dezidiertes Netzwerk sein, beispielsweise ein Ethernet-Netzwerk oder auch eines der vorstehend genannten Bussysteme. Alternativ ist es auch möglich, dass das Kommunikationsnetzwerk ein die Komponenten der Schutzeinrichtung verbindendes Bussystem mit nutzt, wobei die Unterscheidung der erfindungsgemäß zu übermittelnden Nachrichten der FCS-Diagnosen von den vorstehend genannten sicherheitsrelevanten Signalisierungen durch eine Verwendung unterschiedlicher Netzwerkprotokolle erreicht werden kann.

Die Überwachung der jeweiligen Zustände kann durch die Zentraleinheit erfolgen. Alternativ oder zusätzlich ist es auch möglich, dass sich die verschiedenen Überwachungseinheiten gegenseitig überwachen, was nachfolgend noch näher erläutert wird.

Im Rahmen der Erfindung wird somit eine synergetische Vereinigung der Prinzipien der FS und CS vorgeschlagen, die im Folgenden als FCS (Funktionale Cyber Sicherheit - Functional Cyber Safety) bezeichnet werden kann. Die FCS vereint die beiden Fachbereiche FS und CS zu einer Gesamteinheit. Es existieren keine ausschließlich autarken Schichten einer Zwiebel, wie in Fig. 1 dargestellt, sondern eine gemeinsame Schnittmenge aus FS und CS werden bereitgestellt, wobei im Wechselspiel zwischen FS und CS eine Manipulation oder ein Hackerangriff erkannt und ein (erweiterten) sicherer Zustand eines sicherheitskritischen Systems/Maschine/Anlage hergestellt werden kann. Die FCS verhindert oder zumindest erschwert die heutzutage vorhandenen Probleme von Hackerangriffen, Manipulation und Wartungsfehlern (falscher Bauteileinbau, vergessene oder fehlerhafte Parametrisierung).

Zur Verdeutlichung des vorgeschlagenen Überwachungssystems ein Ausführungsbeispiel aus dem Automotive-Bereich: Die einzelnen Komponenten des Überwachungssystems müssen sich hierbei nicht notwendigerweise alle lokal an einem Ort (sprich: in dem gleichen Fahrzeug) befinden. So ist es denkbar, dass einzelne Teile, wie die Zentraleinheit, zusätzlich auf andere Systeme verteilt oder von diesen mit eingebunden werden. So können sich weitere, an dem Überwachungssystem teilnehmende, Überwachungseinheiten auch in anderen Fahrzeugen einer Flotte oder auch in weiteren Fahrzeugen in einer definierten lokalen Umgebung befinden. Auch die Auslagerung einer oder mehrere dieser Komponenten in eine zentralisierte Umgebung, wie der eines Cloud-Dienstes, wäre hier denkbar auf die die Zentraleinheit des Überwachungssystems Zugriff haben kann.

Ein denkbarer Angriff ist hierbei beispielsweise die gezielte Manipulation einzelner Teile der Software, Konfiguration oder Gerätekennungen von Sicherheitsbauteilen der Schutzeinrichtung. Dabei ist es unerheblich, ob die Manipulation über eine Internet-Schnittstelle aus der Ferne oder lokal am Fahrzeug vorgenommen wird. Ein denkbares Szenario ist neben dem Angriff eines Hackers aus der Ferne beispielsweise die Manipulation durch den Besitzer zum Zwecke eines Motor-Tunings (Chip-Tuning) zur unzulässigen Leistungssteuerung eines Fahrzeugs. Ein technisch versierter Angreifer könnte bei Zugriff auf ein (lokales) Sicherheitsbauteil, wie der Drehzahl- und/oder Drehmomentbegrenzungseinrichtung einer Motorsteuerung nicht nur die Manipulation einzelner Sicherheitsfunktionen wie die der Geschwindigkeits- oder Leistungsbegrenzung vornehmen, sondern unter Umständen auch Maßnahmen (wie einen Alarm) der Schutzeinrichtung unterbinden.

Eine Einbindung weiterer Überwachungseinheiten verschiedener Fahrzeuge desselben Typs in einem, mehrere Schutzeinrichtungen überspannendes Kommunikationsnetzwerk, z.B. im Rahmen einer vernetzten Cloudlösung einer Fahrzeugtypserie, würde eine Manipulation mit zunehmender Anzahl beliebig erschweren. So könnten beispielsweise Überwachungseinheiten andere Fahrzeuge als Teil des Überwachungssystems aktiv Sensordaten von Sicherheitsbauteilen des zu überwachenden Fahrzeugs aufnehmen und im verteilten Kommunikationsnetzwerk abgleichen. Dies könnte durch Nachrichten, die FCS-Diagnosen von Geschwindigkeits-, Beschleunigungs- oder Geräuschpegelmessung umfassen, oder durch Analyse von gesendeten Software-Signaturen der Nachrichten über eine gesicherte Nahfeld-Funkverbindung realisiert werden. Ein Abgleich der Fahrzeug-Kennung oder des Fahrzeug-Typs mit den gesammelten und übertragenen Daten durch die Zentraleinheit könnte hierbei dazu führen, dass das zu überwachende Fahrzeug über eine gesicherte Kommunikation des Kommunikationsnetzwerkes angewiesen wird, in einen sicheren FCS-Zustand zu gehen (beispielsweise den Motor zu drosseln oder gänzliche den Startvorgang zu verhindern).

Ähnliche Ausführungsbeispiele lassen sich auch auf andere Bereiche übertragen, wie beispielsweise Haushaltsgeräte, die vernetzt und unter Umständen auch über das Internet erreichbar sein können. So würde beispielsweise bei Kühlschranken eine Schutzeinrichtung durch eine Überwachung des Kompressors vor Überhitzung oder unzureichender Kühlleistung schützen können. Ein Überwachungssystem kann aufgrund einer FCS-Diagnose eine Abschaltung des Kompressors als Sicherheitsbauteil bei Manipulation der Schutzeinrichtung oder einer Überhitzung bei Ausfall eines Temperatur-Überwachungssensors bewirken, wobei eine FCS-Diagnose einer, einem Kompressor, einem Leistungsmesssensor oder einem Temperatursensor als Sicherheitsbauteil zugeordneten Überwachungseinheit einen möglichen Angriffe signalisiert. Der Angriff kann beispielsweise durch den Einbau von Bauteilen, die nicht vom Hersteller freigegeben sind, durch eine Manipulation der Software oder Konfiguration, ein Funktionsausfall, durch nicht autorisierten Zugriff (Hacker), oder durch eine Abweichung des Betriebsverhaltens gegenüber andere über sichere Verbindung miteinander vernetzte Haushaltsgeräte gleichen Kühlschrank-Typ/Version mit Parametern erlaubter Komponenten abweicht. Dies könnte beispielsweise durch eine abweichende Signatur der Soft/Hardware, Konfiguration oder Sensordaten durch die Zentraleinheit des Überwachungssystems festgestellt werden, die entweder lokal im Kühlschrank angeordnet und über Nachrichtenverbindung über ein Kommunikationsnetzwerk mit der Kompressor-Überwachungseinheit und/oder einer Temperatursensor-Überwachungseinheit in Verbindung steht, oder dezentral auf einen verteilten Datenspeicher einer Cloudanwendung zugreifen, auf dem die Überwachungseinheiten einer Mehrzahl von Kühlschränken ihre Nachrichten schicken. So kann zumindest indirekt ein Ausfall des Temperatursensors der Schutzeinrichtung durch die Zentraleinheit festgestellt werden, wonach FCS-Diagnosen der Überwachungseinheiten verschiedener Leistungsmesssensoren verteilter Kühlschränke eine stark abweichende Leistungsaufnahme eines Kühlschranks feststellt, dessen defekter Temperatursensor ausgefallen dauerhaft einen zu hohen Wert ausgibt, so dass dessen Kühlleistungsaufnahme relativ sehr stark erhöht zu weiteren, im Kommunikationsnetzwerk verbundenen Kühlschränken, ist.

Vorteilhaft können Überwachungseinheiten verteilt in mehreren, vorzugsweise vergleichbaren Schutzeinrichtungen eingesetzt und über ein, die Schutzeinrichtungen verbindendes Kommunikationsnetzwerk, insbesondere durch eine netzwerkbasierte Cloudlösung mit einer Zentraleinheit verbunden sein So ist ein modellbasiertes Überwachungssystem für Schutzeinrichtungen von Modellen bzw. Serien gleichartiger Anlagen/Systeme/Maschinen wie Fahrzeuge, Haushaltsgeräte oder ähnliches denkbar, wobei abweichendes Verhalten oder Korruption einzelner Schutzeinrichtungen durch einen Vergleich über die Serie der Schutzeinrichtungen möglich ist, als Beispiel wird weiter unten auf das Ausführungsbeispiel "Fahrzeuge" oder "Kühlschrank" verwiesen.

Gemäß einer vorteilhaften Ausführungsform der Erfindung ist es vorgesehen, dass das Überwachungsprotokoll einen jeweiligen innerhalb der zumindest einen Überwachungseinheit und der Zentraleinheit ausführbaren Programmcode umfasst, welcher Ver- und Entschlüsselungsmittel und/oder Signaturmittel und/oder Verifikationsmittel zum Erzeugen, Übermitteln, Empfangen, Auswerten und/oder Speichern der Nachrichten bzw. FCS-Diagnosen umfasst. Der Programmcode kann in den verschiedenen Einheiten identisch oder zumindest gleichartig sein, sodass gewährleistet ist, dass der Austausch und die Auswertung der Nachrichten bzw. der FCS-Diagnosen in gleichartiger Weise erfolgen. Durch die Verwendung von Verund Entschlüsselungs-, Signatur-, und/oder Verifikationsmitteln, welche sich kryptographische Methoden zunutze machen, wird u.a. gewährleistet, dass Nachrichten nur von autorisierten Komponenten gesendet bzw. empfangen werden können und etwaige Manipulationen durch Austausch von einzelnen Komponenten durch die Zentraleinheit oder andere Überwachungseinheiten entdeckt werden können. Die Ver- und Entschlüsselungsmittel gewährleisten, dass die Nachrichten verschlüsselt gesendet werden und nur von entsprechend autorisierten Komponenten, die über die korrespondierenden Entschlüsselungsmittel verfügen, gelesen werden können. Unter Signaturmitteln werden insbesondere Mittel verstanden, die die Urheberschaft einer Nachricht überprüfbar machen, wobei das Überprüfen beispielsweise durch die Verifikationsmittel erfolgen kann.

Erfindungsgemäß umfasst eine von einer Überwachungseinheit ausgesendete Nachricht mit der darin enthaltenen FCS-Diagnose Informationen über eine Identität der Überwachungseinheit und/oder eines mit der Überwachungseinheit verbundenen Sicherheitsbauteils und/oder über ein Überwachungssignal oder einen Sicherheitsschaltbefehl, welches oder welcher von einem mit der Überwachungseinheit verbundenen Sicherheitsbauteil erzeugt wurde.

Alternativ oder zusätzlich umfasst eine von der Zentraleinheit ausgesendete Nachricht ein in einer Überwachungseinheit fälschungssicheren Identitätsnachweis in Form eines speicherbaren Zertifikats, welches diese Überwachungseinheit als zulässige Komponente des Überwachungssystems kennzeichnet. Unter der Identität einer Überwachungseinheit bzw. eines mit der Überwachungseinheit verbundenen Sicherheitsbauteils wird beispielsweise eine individuelle Seriennummer der Überwachungseinheit bzw. des Sicherheitsbauteils verstanden, die beispielsweise mittels der Überwachungseinheit aus dem Sicherheitsbauteil ausgelesen werden kann. Insbesondere kann es sich bei einer Information über eine Identität einer Einheit auch um das in dieser Einheit gespeicherte Zertifikat handeln. Das Merkmal, wonach die Nachricht Informationen über eine Identität umfasst, bedeutet nicht, dass die Identität selbst, d.h. die Seriennummer oder das Zertifikat, übertragen werden muss. Vielmehr ist es beispielsweise auch ausreichend, einen aus der Identität erzeugten Hash-Wert dieser Identität als Identitätsinformation zu übertragen, der dann z.B. durch die Zentraleinheit ausgewertet und/oder überprüft werden kann.

Durch das Übermitteln eines fälschungssicheren Identitätsnachweises, beispielsweise in Form eines Zertifikats, digitale Signatur, einer Hardwarecodierung etc., von der Zentraleinheit an eine der Überwachungseinheiten kann insbesondere die Mitgliedschaft einer bestimmten, beispielsweise einer neuen oder ausgetauschten Komponente in dem Überwachungssystem bestätigt werden. So kann gewährleistet werden, dass nur diejenigen Komponenten innerhalb des Kommunikationsnetzwerks bzw. innerhalb des Überwachungssystems kommunizieren dürfen, die über ein gültiges gültigen Identitätsnachweis verfügen. Verfügt eine Komponente über kein oder einen ungültigem Identitätsnachweis, können Nachrichten, die von dieser Komponente stammen, als Indiz für eine Manipulation gewertet werden und entsprechende Sicherheitsmaßnahmen eingeleitet werden.

Vorteilhafterweise kann zumindest ein Teil der Nachrichten verschlüsselt, und insbesondere zusätzlich signiert, übertragen werden, wobei ein Verschlüsseln der Nachrichten bevorzugt mittels eines asymmetrischen Verschlüsselungsverfahrens erfolgt. Insbesondere kann ein Public-Key-Verschlüsselungsverfahren zum Einsatz kommen, sodass die kommunizierenden Komponenten keinen gemeinsamen geheimen Schlüssel zu kennen brauchen. Der öffentliche Schlüssel ermöglicht es einer Komponente, Nachrichten für eine andere Komponente, die im Besitz des zu diesem öffentlichen Schlüssel gehörigen privaten Schlüssels ist, zu verschlüsseln, deren digitale Signaturen zu prüfen oder sie zu authentifizieren. Der private Schlüssel ermöglicht es der Besitzerkomponente, mit dem öffentlichen Schlüssel verschlüsselte Nachrichten zu entschlüsseln, digitale Signaturen zu erzeugen oder sich zu authentifizieren. Entsprechende Verschlüsselungs- oder Kryptographieverfahren sind allgemein bekannt.

Der private Schlüssel kann beispielsweise in einem speziell geschützten Speicher einer Überwachungseinheit bzw. der Zentraleinheit hinterlegt sein. Ein Beispiel für einen derartigen Speicher ist ein sogenanntes TPM (Trusted Platform Modul).

Mithilfe des öffentlichen Schlüssels können einzelne Komponenten des Überwachungssystems dahin gehend überprüft werden, ob es sich um zulässige, d. h. systemzugehörige Komponenten handelt. Beispielsweise kann mittels des sogenannten Challenge-Response-Verfahrens festgestellt werden, ob eine Komponente, die über einen öffentlichen Schlüssel verfügt, auch im Besitz des zugehörigen privaten Schlüssels ist.

Erfindungsgemäß umfasst das Überwachungsprotokoll eine Blockchain, wobei alle oder ein Teil der in dem Überwachungssystem übermittelten Nachrichten in der Blockchain gespeichert werden. Unter einer Blockchain wird eine kontinuierlich erweiterbare Liste von als Blöcke bezeichneten Datensätzen verstanden, welche mittels kryptographischer Verfahren miteinander verkettet sind. Jeder Block kann typischerweise einen kryptographisch sicheren Hash-Wert des vorhergehenden Blocks, einen Zeitstempel und Zustandsdaten umfassen. Hierbei kann die Zentraleinheit die Funktion eines Blockchain-Masters übernehmen, während die eine oder mehrere Überwachungseinheiten die Funktion von jeweiligen Blockchain-Clients ausüben. Die Zentraleinheit in ihrer Funktion als Blockchain-Master kann neue Komponenten in das Überwachungssystem hinzufügen, d.h. ihre Mitgliedschaft in dem Überwachungssystem bzw. deren Entfernung oder deren Austausch autorisieren. Jede dieser Änderungen an der Zusammensetzung des Überwachungssystems kann in der Blockchain festgehalten werden. Um den für die Blockchain erforderlichen Speicherplatz in Grenzen zu halten, kann vorgesehen werden, dass nicht alle sondern nur bestimmte, besonders relevante Nachrichten gespeichert werden, wobei für jede Nachrichtenart und/oder die Nachricht aussendende Komponente individuelle Kriterien und/oder Relevanzniveaus festgelegt werden können.

Erfindungsgemäß werden die Blockchain oder weitere Instanzen der Blockchain in der Zentraleinheit und zusätzlich zumindest in einem Teil der Überwachungseinheiten gespeichert. Vorteilhafterweise wird die Blockchain in allen Einheiten des Überwachungssystems gespeichert.

Bevorzugt wird die in einer jeweiligen Einheit gespeicherte Blockchain auch durch diese Einheit selbst erzeugt. Da die innerhalb eines als ein Blockchain-System ausgestalten Überwachungssystems verbreiteten Nachrichten bevorzugt an alle Komponenten des Überwachungssystems übermittelt werden, können die Nachrichten oder zumindest der Teil der Nachrichten, die für eine Speicherung in der Blockchain vorgesehen sind, in die Blockchain eingearbeitet werden. Durch eine dezentrale Speicherung mehrerer Instanzen der Blockchain können Manipulationsversuche einzelner Komponenten, insbesondere der Zentraleinheit, beispielsweise deren unautorisierter Austausch, ohne Weiteres aufgedeckt werden, was mit Bezug auf eine weitere Ausgestaltung nachfolgend noch näher erläutert wird.

Das Hinzufügen von neuen Einträgen zur Blockchain kann beispielsweise durch den privaten Schlüssel der eintragenden Komponente signiert werden.

Es kann vorgesehen sein, dass für eine Aufnahme einer Nachricht oder einer Gruppe von Nachrichten die speichernde Einheit einen sogenannten Proof-of-Work zu leisten hat, um eine mögliche Manipulation oder Korruption der Blockchain zu erschweren. Ein Proof-of-Work (deutsch etwa "Arbeitsnachweis") kann durch Lösung einer mäßig schweren Aufgabe durch die Einheit erbracht werden, welche eine Nachricht in die Blockchain aufnehmen möchte. Das Ergebnis kann von einer oder mehreren anderen Einheiten, insbesondere die Zentraleinheit, ohne großen Aufwand nachgeprüft werden.

Gemäß einer weiteren vorteilhaften Ausführungsform der Erfindung ist es vorgesehen, dass eine in einer Komponente des Überwachungssystems gespeicherte Blockchain oder ein kryptographischer Hash-Wert dieser Blockchain zeitgesteuert, ereignisgesteuert und/oder auf Anforderung durch eine andere Komponente des Überwachungssystems an zumindest eine Komponente des Überwachungssystems übermittelt wird, wobei insbesondere eine von einer Komponente empfangene Blockchain oder ein empfangener kryptographischer Hash-Wert dieser Blockchain mit der in der empfangenden Komponente gespeicherten Blockchain oder einem kryptographischen Hash-Wert der gespeicherten Blockchain verglichen wird. Dieser Vergleich wird vorzugsweise von der Zentraleinheit vorgenommen, welche die gespeicherten Blockchains bzw. deren Hash-Werte von ausgewählten oder allen Überwachungseinheiten anfordert und untereinander oder mit der eigenen Blockchain bzw. deren Hash-Wert vergleicht. Wenn bei diesem Vergleich eine Übereinstimmung festgestellt wird, befindet sich das Überwachungssystem in einem integren Zustand. Werden jedoch Abweichungen festgestellt, ist dies als Indiz dafür zu werten, dass unter Umständen ein Manipulationsversuch oder auch eine Fehlfunktion bei einzelnen Komponenten vorliegt.

Vorteilhafterweise sind die Zentraleinheit und/oder die zumindest eine Überwachungseinheit dazu eingerichtet, bei einer festgestellten Abweichung zumindest eines Zustandes von dem zugeordneten Sollzustand, insbesondere bei einer festgestellten Abweichung zwischen verschiedenen Instanzen, insbesondere einer konfigurierbaren Anzahl von Instanzen, der Blockchain, einen mit der Überwachungseinheit verbundenen Überwachungssensor derart zu steuern, dass der Überwachungssensor anstelle eines regulären Sensorsignals ein vorgegebenes Alarmierungssensorsignal erzeugt, und/oder eine die festgestellte Abweichung signalisierende Nachricht auszusenden, und/oder die Sicherheitssteuerung und/oder das damit ausgestattete sicherheitskritische System in einen vorgegebenen sicheren Zustand zu überführen. Eine Abweichung vom Sollzustand kann auch in einer Änderung einer fälschungssicheren Identität bestehen, die beispielsweise durch ein Datenzertifikat oder eine Hardwarecodierung belegbar ist. So kann bei einem unautorisierten Austausch eines Bauteils eine unzulässige Sollzustandsabweichung vorliegen, so dass eine Alarmierung, eine Signalisierungsnachricht abgesetzt und/oder die Sicherheitssteuerung bzw. das damit ausgestattete System, Maschine oder Anlage in einen sicheren Zustand überführt werden.

So sind Überwachungssensoren, wie z.B. (Sicherheits-)Sensoren, häufig dazu eingerichtet, bei einer Fehlfunktion ein Sensorsignal auszugeben, das sich außerhalb eines regulären Wertebereichs befindet. Dieses hier als Alarmierungssensorsignal bezeichnete Sensorsignal kann von der Sicherheitssteuerung als Hinweis auf eine Fehlfunktion interpretiert werden, sodass entsprechende Maßnahmen, beispielsweise das Überführen einer überwachten Maschine/Anlage/System in einen sicheren Zustand, veranlasst werden können.

Eine Abweichung kann beispielsweise ein für einen zu überwachenden Überwachungssensor falsch ausgewiesenes Ausgangssignal, z.B. ein Ausgangssignal in einem Bereich sein, der für diesen Überwachungssensor technisch plausibel nicht möglich ist, sein.

Alternativ oder zusätzlich kann eine entsprechende signalisierende Nachricht ausgesendet werden, die von anderen Überwachungseinheiten und/oder der Zentraleinheit empfangen werden kann und dort gegebenenfalls Maßnahmen auslösen kann, die dazu führen, dass die überwachte Schutzeinrichtung bzw. das damit ausgestattete System, Maschine oder Anlage in einen sicheren Zustand überführt wird. Bei der signalisierenden Nachricht kann es sich zum Beispiel um eine Statusmeldung handeln, welche etwa eine festgestellte Manipulation eines Überwachungssensors repräsentiert. Diese Statusmeldung kann von einer Überwachungseinheit in die Blockchain und/oder an die Zentraleinheit oder alle Überwachungseinheiten übermittelt werden. Dies wurde beim Initiieren festgelegt. Die Zentraleinheit oder Überwachungseinheiten führen dann die Maßnahmen durch, die beim Initiieren festgelegt wurden und entscheidet dann, welche Maßnahmen ergriffen werden sollen, wobei diese Maßnahme beispielsweise lediglich eine Dokumentation oder alternativ oder zusätzlich auch das Überführen der Sicherheitssteuerung in den sicheren Zustand umfassen kann, wobei gegebenenfalls auch eine zeitliche Verzögerung vorgesehen sein kann.

Schließlich kann alternativ oder zusätzlich auch die Sicherheitssteuerung bzw. das damit ausgestattete System, Maschine oder Anlage unmittelbar in einen vorgegebenen sicheren Zustand überführt werden. Dies kann beispielsweise durch die Zentraleinheit durchgeführt werden, welche über einen entsprechenden Steuerkanal mit der Sicherheitssteuerung verbunden sein kann. Beispielsweise kann dieser Steuereingang zu einem Sensoreingang der Sicherheitssteuerung führen. Grundsätzlich kann das Überführen in einen sicheren Zustand aber auch durch eine der Überwachungseinheiten erfolgen. Unter einem Überführen der Sicherheitssteuerung in einen sicheren Zustand wird insbesondere ein Veranlassen der Sicherheitssteuerung zum Ausgeben von Sicherheitsschaltbefehlen verstanden, welche eine von der Schutzeinrichtung abgesicherte Maschine in eine Betriebsart überführt wird, in welcher eine Gefährdung von Mensch und/oder Umwelt zumindest verringert, wenn nicht sogar ganz ausgeschlossen ist, beispielsweise das Anhalten bewegter Teile, eine Unterbrechung der Energiezufuhr oder ein Starten einer Abschaltprozedur, z.B. bei komplexeren Anlagen, bei denen eine Sofortabschaltung nicht ohne weiteres möglich ist, etwa bei Atomkraftanlagen.

Gemäß einer weiteren vorteilhaften Ausgestaltung der Erfindung ist vorgesehen, dass die zumindest eine Überwachungseinheit dazu eingerichtet ist, zyklisch und/oder auf Anforderung durch die Zentraleinheit Nachrichten auszusenden, und dass die Zentraleinheit dazu eingerichtet ist, diese Nachrichten zu empfangen, zumindest für einen jeweiligen Zyklus und/oder innerhalb einer vorgegebenen Zeitdauer nach der Aufforderung die Anzahl und/oder die Reihenfolge der empfangenen Nachrichten zu ermitteln und mit einer vorgegebenen Sollanzahl und/oder einer vorgegebenen Sollreihenfolge zu vergleichen, bei einer festgestellten Abweichung eine die festgestellte Abweichung signalisierende Nachricht auszusenden und insbesondere diese Nachricht vorzugsweise in der Blockchain zu speichern, und/oder bei einer festgestellten Abweichung die Sicherheitssteuerung in einen vorgegebenen sicheren Zustand zu überführen. Auch andere Komponenten können die Nachrichten in ihrer jeweiligen Blockchain speichern. Beispielsweise kann eine Überwachungseinheit mit Aussendung der abgefragten Nachricht übermitteln, dass die Überwachungseinheit bzw. der von dieser Überwachungseinheit überwachte Sensor vorhanden und/oder betriebsbereit ist, und zugleich auch das aktuelle Überwachungssignal des Sensors übermitteln.

Weiterhin vorteilhaft kann auch zumindest eine oder eine parametrierbare Anzahl von Überwachungseinheiten Nachrichten empfangen und überprüfen und gegebenenfalls eine Abschaltung initiieren. Dies ermöglicht eine redundante Überwachung von Nachrichten, um z.B. bei einem Angriff oder Hackversuch auf die Zentraleinheit angreifen / hacken das Schutzsystem nicht ausgehebelt werden kann. Somit können auch zumindest einzelne Überwachungseinheiten Teile der Überwachungsaufgaben der Zentraleinheit übernehmen.

Wenn beispielsweise eine der angeforderten Nachrichten ausbleiben würde, beispielsweise weil das betreffende Sicherheitsbauteil samt Überwachungseinheit unzulässiger Weise entfernt wurde, würde diese unzulässige Änderung in die Blockchain eingetragen. Nach entsprechender Auswertung der Blockchain können dann von der Zentraleinheit bzw. einer autorisierten Überwachungseinheit entsprechende Sicherheitsmaßnahmen eingeleitet werden.

Wie bereits vorstehend erläutert wurde, kann das Kommunikationsnetzwerk ein Bussystem, insbesondere ein Feldbussystem umfassen, wobei insbesondere das Kommunikationsnetzwerk zumindest ein Teil eines Bussystems der Schutzeinrichtung, welches die Sicherheitsbauteile miteinander verbindet, umfasst. Ein vorhandenes Bussystem, welches für die Kommunikation der Sicherheitsbauteile der Schutzeinrichtung vorgesehen ist, kann somit gleichzeitig auch als Kommunikationsnetzwerk für das Überwachungssystem genutzt werden. Alternativ kann auch ein separates Bussystem oder andere Netzwerktopologien für das Kommunikationsnetzwerk verwendet werden.

Gemäß einer vorteilhaften Ausführungsform der Erfindung ist es vorgesehen, dass das Überwachungssystem zusätzlich zu einer Überwachungsbetriebsart, in welcher eine Überprüfung eines jeweiligen Zustands auf Übereinstimmung oder Abweichung von einem zugeordneten Sollzustand erfolgt, in einer Kommunikationsbetriebsart betreibbar ist, in welcher zumindest eine Komponente zum Überwachungssystem hinzugefügt, aus dem Überwachungssystem entfernt oder zumindest eine Funktionalität der Komponente konfiguriert und/oder parametriert wird. In der Konfigurationsbetriebsart können beispielsweise neue Überwachungseinheiten bzw. Sensoren hinzugefügt, entfernt oder ausgetauscht werden. Dies kann dadurch erfolgen, dass sich beispielsweise eine von einer Bedienperson neu installierte Überwachungseinheit mit ihrer eindeutigen Kennung oder Identifikationsnummer bei der Zentraleinheit anmeldet und die Zentraleinheit - gegebenenfalls nach einer Bestätigung durch die Bedienperson - eine Nachricht mit einem fälschungssicheren Identitätsnachweis, welcher zum Beispiel mit der Kennung der Überwachungseinheit kryptographisch verknüpft ist, an die anfragende, neu installierte Überwachungseinheit übermittelt. Zugleich empfangen andere Komponenten ebenfalls diese Nachricht und können sie ggf. in ihre jeweilige Blockchain einbauen, sodass zukünftig Nachrichten dieser neuen Überwachungseinheit als integer oder valide eingestuft werden können. Das Konfigurieren und/oder Parametrieren zumindest einer Funktionalität einer Komponente kann insbesondere zeitliche oder funktionale Vorgaben für ein Aussenden einer Nachricht (z.B. Statusmeldung alle zehn Sekunden, Verhalten bei festgestellter Zustandsabweichung), eine Reaktion auf Nachrichten von anderen Komponenten, Vorgaben für die Aufnahme von empfangenen Nachrichten in die Blockchain und dergleichen umfassen.

Bevorzugt ist nur die Zentraleinheit dafür eingerichtet, das Überwachungssystem in die Konfigurationsbetriebsart zu versetzen und/oder in der Konfigurationsbetriebsart zu betreiben, wobei insbesondere die Zentraleinheit dafür eingerichtet ist, das Versetzen des Überwachungssystems in die Konfigurationsbetriebsart nur nach einer positiven Prüfung auf Vorliegen zumindest eines Sicherheitsmerkmals zuzulassen. Bei dem Sicherheitsmerkmal kann es sich beispielsweise um ein Benutzerkennwort, einen Hardwaredongle, oder einen fälschungssicheren digitalen Identitätsnachweis, wie ein eindeutiges Schlüssel-(Key) Zertifikat, beispielsweise ein auf einem Speichermedium gespeicherter Schlüssel/Key, handeln. Die Erfindung betrifft ferner eine sicherheitsgerichtete Schutzeinrichtung mit mehreren Sicherheitsbauteilen, wobei die Sicherheitsbauteile zumindest einen zum Erzeugen von jeweiligen Sensorsignalen eingerichteten Überwachungssensor und eine mit dem zumindest einen Überwachungssensor verbundene Sicherheitssteuerung umfasst, wobei die Sicherheitssteuerung zum Empfangen und Auswerten der Sensorsignale und zum Erzeugen und Ausgeben von Sicherheitsschaltbefehlen auf der Grundlage der Sensorsignale eingerichtet ist, und mit einem Überwachungssystem gemäß zumindest einer der vorhergehend beschriebenen Ausgestaltungen, wobei zumindest ein Teil der Sicherheitsbauteile mit einer zugeordneten Überwachungseinheit oder der Zentraleinheit verbunden ist.

Bevorzugt sind alle Sicherheitsbauteile der Schutzeinrichtung mit einer Überwachungseinheit bzw. der Zentraleinheit verbunden.

Es kann vorgesehen werden, dass ein oder mehrere Sicherheitsbauteile mit jeweils einer Überwachungseinheit oder Zentraleinheit verbunden sind, d.h., eine Überwachungseinheit überwacht gleichzeitig mehrere Sicherheitsbauteile.

Gemäß einer vorteilhaften Ausführungsform ist vorgesehen, dass ein jeweiliges Sicherheitsbauteil und die zugeordnete Überwachungseinheit oder Zentraleinheit in einer gemeinsamen Baueinheit integriert sind. Hierdurch wird ein noch höherer Schutz gegenüber Manipulation gewährleistet. Zugleich vereinfacht sich der Installationsaufwand.

Alternativ können die Sicherheitsbauteile und die Überwachungseinheiten bzw. die Zentraleinheit als separate Baugruppen ausgeführt sein, die lediglich entsprechend miteinander verbunden sind. Eine solche Ausgestaltung eignet sich insbesondere als Nachrüstlösung oder als modulares System. Hierbei können beispielsweise Ausgänge der Überwachungssensoren durch die Überwachungseinheit durchgeschleift werden, wodurch auch festgestellt werden kann, wenn versucht wird, einen Sensor von der Überwachungseinheit zu trennen.

Im Betrieb kann es zu Defekten oder zu einer gezielten Manipulation der Schutzreinrichtung kommen, z.B. in dem ein Sensor defekt geht, außer Betrieb gesetzt oder unzulässig ausgetauscht wird oder ein zum Betriebszustand der Maschine inkonsistentes Signal gibt. Dies führt zu einer unerwünschten und nur schwer zu entdeckenden Korruption der funktionalen Sicherheit der sicherheitskritischen Anlage, des Systems oder der Maschine.

Im Kern schlägt die Erfindung vor, übergeordnet ein Überwachungssystem auf dieser Schutzeinrichtung mit Techniken der Datensicherheit, insbesondere der Cyber Security aufzusetzen, wobei das Verhalten des Überwachungssystems durch ein Überwachungsprotokoll und ggf. unter Einsatz einer Blockchain-Datenstruktur bestimmbar ist. Das Überwachungssystem überprüft eigenständig und fortlaufend die Funktion und Integrität des Sicherheitssystems bzw. der einzelnen Sensoren, der Steuerungsverarbeitung und der Aktuatorenbeeinflussung und umfasst ein eigenes (im Optimalfall autarkes) Kommunikationsnetzwerk und eine Zentraleinheit, durch die die einzelnen Überwachungssensoren des Sicherheitssystems überwacht und deren Aktivitäten protokolliert werden. Das Überwachungsprotokoll kann beispielsweise ein fälschungssicheres Blockchain-Datenarchiv nutzen, was im Sinne des Industrie 4.0 Gedankens eine lückenlose Protokollierung und Nachverfolgung des Funktionalen Sicherheitsverhaltens der Anlage ermöglicht. Insofern wird eine Überprüfung einer Funktionalen Schutzeinrichtung durch ein auf Konzepten der Cyber Security beruhendes Überwachungssystem vorgeschlagen. Das Überwachungssystem kann in neu implementierten Schutzeinrichtungen vorgesehen, aber auch bei bestehenden Schutzeinrichtungen nachgerüstet werden und protokolliert und verhindert Manipulation, Fehlverhalten und Ausfall der Schutzeinrichtung.

Exemplarisch soll anhand eines Beispiels die Funktion der Überwachungseinrichtung einer Schutzeinrichtung im Folgenden am Beispiel einer automatischen Distanzkontrolle von Fahrzeugen dargestellt werden. Hierzu wird die Sicherheitsfunktion der Funktionalen Sicherheit des automatischen Distanzkontrollsystems eines Fahrzeugs als Schutzeinrichtung betrachtet, die, um Menschen nicht zu gefährden, lautet: gewährleiste einen ausreichenden Abstand durch automatische Distanzkontrolle gegenüber vorausfahrenden und ggf. nachfolgende Fahrzeuge. Beteilige Überwachungssensoren, Sicherheitssteuerung und Aktoren als Sicherheitsbauteile der Schutzeinrichtung, die an der Sicherheitsfunktion beteiligt sind: Radarsensor vorne, Geschwindigkeitssensor, Sicherheitssteuerung, Motor, Bremsaktoren und Bremsen. Der sichere Zustand der Funktionalen Sicherheit, falls es ein Problem mit den Sicherheitsbauteilen in der Schutzeinrichtung gibt, lautet: Kontrolliertes Bremsen, um Auffahrunfälle nach vorne und hinten zu vermeiden.

Hierzu misst der Radarsensor die Distanz zum nächsten Hindernis / vorausfahrenden Fahrzeug, ggf. auch nachfolgendem Fahrzeug. Dieser Wert wird an die Sicherheitssteuerung übergeben. Diese berechnet aus der Distanz zum Hindernis, der Änderung zum Hindernis, der Geschwindigkeit des eigenen Fahrzeugs sowie der eingestellten Maximalgeschwindigkeit, ob gebremst oder beschleunigt werden soll. In diesem Beispiel verfügt das Fahrzeug über Reifendrucksensoren, die nicht Teil der Sicherheitsfunktion sind. Dieser wird aber zum Einfallstor für Hacker, da er über eine Bluetooth-Schnittstelle (Funk) an den CAN-Bus des Autos angeschlossen ist. So kann es beispielhaft vorstellbar sein, dass ein Wert des Reifendrucksensors in eine Bestimmung der Fahrzeuggeschwindigkeit einfließen kann, da ausgehend vom Reifendruck der Raddurchmesser bestimmt und mit Berücksichtigung der Umdrehungszahl eines Drehzahlsensors ein Geschwindigkeitswert ableitbar ist. Eine Manipulation am ausgegebenen Sensorwert des Reifendrucksensors, der somit ein Überwachungssensor ist, kann in der Schutzeinrichtung somit eine unmittelbare Beeinflussung der eigenen Geschwindigkeitsabschätzung sein.

Ein möglicher Angriff kann wie folgt dargestellt werden: Der Angreifer könnte sich mittels des Zugangs über die Funkschnittstelle in den CAN-Bus einschalten und z.B. den übertragenden Wert des Radarsensors verfälschen bzw. den Sensor angreifen durch eigenständige Übermittlung eines falschen Abstandswertes, indem der Hacker vorgibt, der eigentliche Radarsensors zu sein (Fall 1). Daneben oder zusätzlich kann der Angreifer eine Verfälschung (Überschreiben) des augenblicklich übertragenden Wertes des Radarsensors, (Fall 2) bewirken. Auch wäre es möglich, dass der Angreifer den Radarsensor als defekt signalisiert, womit ein ggfs. ermüdeter Fahrer gezwungen wäre, eine Lenk- und Abstandskontrollaufgabe wieder selber zu übernehmen (Fall 3). Schließlich kann ein Hack des Radarsensors erfolgen, so dass beliebige Werte vom Radarsensor übertragen werden (Fall 4).

Die vorgenannten Fälle 1,2 und 4 würden von der Sicherheitssteuerung und dem Gesamtsystem aus dem Stand der Technik nicht erkannt werden. Als Konsequenz könnte der Angreifer das Fahrzeug entweder mit dem Hindernis kollidieren lassen (Distanzangabe Radarsensor zu groß, Geschwindigkeitsangabe zu niedrig) oder eine Notbremsung erzwingen (Distanzangabe Radarsensor zu groß. Geschwindigkeitsangabe zu hoch). Möglich Folgen wären z.B. eine Kollision mit hoher Geschwindigkeit auf der Autobahn, mit unter Umständen tödlichen Folgen. Im vorgenannten Fall 3 könnte aufgrund des Deaktivierens eines Fahrerassistenzsystems bei schlechter Fahrweise und Zustand des Fahrers zu einem Unfall führen. Schlimmer wäre dieser Fall bei einem autonomen Fahren.

Im Ergebnis kann festgestellt werden, dass durch ein Versagen eines Teilsystemsystems der CS (hier eine Funkschnittstelle) ein Angriff ins Gesamtsystem der Schutzeinrichtung der automatischen Distanzkontrolle gelingt, der im Normallfall durch die FS nicht mehr aufgehalten werden kann. Der CS kann u.U. hier kein Versagen vorgehalten werden, denn ggf. hätte ein Softwareupdate der Funkschnittstellensoftware des Reifendrucksensors einen Hack, in diesem Fall ein Zugriff auf den CAN-Bus, verhindern können. Auch die FS kann die Korruption nicht verhindern, denn eine Überprüfung der Funktion des Reifendrucksensors und der Schutzeinrichtung würde keine Korruption erkennen lassen. Der Radarsensor hat einen ausreichenden Abstand gemeldet hat, es wurde beschleunigt, die notwendigen Abstandsparameter waren korrekt eingestellt und ein Fehler oder Bauteilversagen kann nicht festgestellt werden.

Die Erfindung schlägt somit ein Überwachungssystem einer FS-Schutzeinrichtung nach den Prinzipien des Functional Cyber Safety (FCS) vor, die in vielfältigen, sicherheitskritischen Anwendungen eingesetzt werden kann (Beispiele siehe unten), wobei die Schutzeinrichtung über Überwachungssensoren, eine Sicherheitssteuerung, und Aktoren aufweist und somit eine Gesamtheit von Sicherheitsbauteilen, Schnittstellen, Software, Parametrierungen darstellt. Das die FS-Schutzeinrichtung überwachende FCS-Überwachungssystem, das in der Lage ist, mittels einer FCS-Überwachungseinheit zumindest einen Teil der Sicherheitsbauteile der Schutzeinrichtung zu überprüfen, führt eine sogenannte FCS-Diagnose durch eine, einem Sicherheitsbauteil zugeordnete Überwachungseinheit durch.

Hierzu nimmt eine Überwachungseinheit des FCS-Überwachungssystems, zumeist aber nicht ausschließlich passive Informationen des Sicherheitsbauteils auf und übermittelt diese über ein Kommunikationsnetzwerk, i.d.R. ein eigenes (separates) Bussystem, aber auch physikalisch aufgesetzt auf einen bereits vorhandenen Datenbus der Sicherheitseinrichtung, und ggf. verschlüsselt oder unverschlüsselt, an die Zentraleinheit des Überwachungssystems. Dabei arbeitet die FCS-Diagnose i.d.R. im Hintergrund und bleibt von der Schutzeinrichtung und dem Anwender im Idealfall unentdeckt. Hardwareseitig kann das Überwachungssystem und/oder die Überwachungseinheit ein separates oder integriertes Bauteil (System-On-Chip) sein. Insofern kann einem Sicherheitsbauteil der FS-Schutzeinrichtung oder einer die CS realisierendes Sicherheitsbauteil eine Überwachungseinheit des FCS-Überwachungssystems übergestülpt werden. Die Überwachungseinheit kann über Möglichkeiten verfügen, das Sicherheitsbauteil zu kontrollieren oder zu zerstören.

Die FCS-Überwachungseinheit wertet die FCS-Diagnosemitteilungen der Überwachungseinheiten aus und bestimmt mittels in seinem im Überwachungsprotokoll hinterlegten FCS-Parameter Verhaltensweisen für bestimmte Ereignisse, die beispielsweise unveränderbar durch eine schwer-korrumpierbare Datenstruktur, wie eine Blockchain, vordefinierbar sind. Diese Vorgaben durch FCS-Parameter können idealerweise verteilt im gesamten FCS-Überwachungssystem abgespeichert werden. Das FCS-Kommunikationsnetzwerk: kann ein eigener und geschlossener Datenbus innerhalb des FCS-Überwachungssystems sein, oder einen bereits vorhandenen Datenbus der FS-Schutzeinrichtung nutzen. Die das Verhalten des Überwachungssystems bestimmende FCS-Parameter sind veränderbare oder unveränderbare Vorgaben der FCS-Zentraleinheit. Eine Veränderung wird vorzugsweise nur durch die Zentraleinheit ermöglicht.

Im vorgenannten Beispiel kann eine FCS-Diagnose durch jeweils eine Überwachungseinheit bezüglich eines Sicherheitsbauteils, wie einem Radarsensor, einem Geschwindigkeitsmesser, Bremsaktoren und Bremsen oder einer automatischen Distanzkontroll-Schutzeinrichtung, periodisch oder aperiodisch erstellt werden. Die Zentraleinheit kann auf Basis eines FCS-Parameters als Reaktion auf eine Angriffsmeldung einer FCS-Diagnose einer Überwachungseinheit eine sofortige Herstellung eines sicheren FCS-Zustandes bewirken. In diesem Fall könnte ein FCS-Zustand in einer langsamen Herabsetzung der Geschwindigkeit, Aktivieren des Warnblinkers und rechts heranfahren des Fahrzeugs an den Standstreifen und Ausschalten des Antriebes bestehen.

In einem konkreten Ablauf eines Hacks des betrachteten FCS-Überwachungssystems kann im vorgenannten Fall 1 in einer eigenständigen Übermittlung eines falschen Abstandswertes bestehen, den der Angreifer vorgibt, der eigentlich ein Wert des Radarsensors sein soll. Die Überwachungseinheit des Radarsensors würde eine FCS-Diagnose durch den Vergleich des Speicherinhaltes des Radarsensors, seiner Sensorwerte und der Tatsache, dass der Radarsensor zu dieser Zeit keine Signale übertragen hat, einen Angriff feststellen können. Die FCS-Zentraleinheit, aber auch alle weiteren Überwachungseinheiten, würde über diesen Angriff auf den Radarsensor über das FCS-Kommunikationsnetzwerk informiert werden mit der Aufforderung, sofort den FCS-Zustand herzustellen, der wie folgt ablaufen könnte: Die FCS-Diagnosen würden über einen den Bremsen und den Bremsaktoren zugeordnete Überwachungseinheit eine langsame und kontrollierte Bremsung bewirken. Die FCS-Zentraleinheit würde die Sicherheitssteuerung zwingen, die Warnblinker einzuschalten. Die FCS-Zentraleinheit würde die Sicherheitssteuerung zwingen, den Fahrer aufzufordern, augenblicklich rechts ran zu fahren oder ggfs. die Lenkung zu übernehmen. Nachdem der Motor ausgestellt wurde, würde er deaktiviert bleiben, bis die FCS-Zentraleinheit (z.B. nach einer Wartung) das Fahrzeug wieder freigibt.

Im vorgenannten Fall 2 - einer Verfälschung (Überschreiben) eines augenblicklich übertragenden Wertes des Radarsensor - würde erkannt werden durch Vergleich der richtigen Sensorwerte, sowie der Speicherinhalte durch die dem Radarsensor zugeordneten Überwachungseinheit, die eine FCS-Diagnose erstellen würde. Der weitere Ablauf wäre identisch zum Fall 1.

Im Rahmen des Falls 3 (Markierung des Radarsensors als defekt) würde, wie bei vorgenannten Fall 1, durch einen Vergleich der richtigen Sensorwerte, sowie der Speicherinhalte durch die Überwachungseinheit des Radarsensors eine FCS-Diagnose eines Defekts erkannt werden. Die Reaktionen wäre ebenfalls analog wie in Fall 1.

Ein Hack des Radarsensors (Fall 4) würde z.B. durch ein Einloggen in den Sensor bei laufender Fahrt erkannt werden können. Da dieser Login nur in der Werkstatt erlaubt ist, würde der sichere Zustand wie bei Fall 1 ausgelöst. Weitere Diagnosemöglichkeiten eines Hacks wären z.B. die Charakteristika der Prozessor-Auslastung oder Zugriff auf Ressourcen. Die Reaktionen wäre die gleiche wie in Fall 1.

Sollte ein Hardwareangriff auf das FCS-Überwachungssystem erfolgen, würde das Kommunikationsnetzwerk dies z.B. durch fehlende Sync-Telegramme feststellen. Softwareangriffe würden über Änderungen und Vergleich der nicht veränderbaren FCS-Parameter des Überwachungsprotokolls (z.B. als Blockchain) bzw. von z.B. veränderten Hash-Werten der FCS-Diagnose detektiert werden.

Zusammenfassend kann anhand des vorgenannten FCS-Beispiels eines automatischen Distanzkontrollers durch eine Schutzeinrichtung eines Fahrzeugs folgendes festgestellt werden:
- Ein erfindungsgemäßes FCS-Überwachungssystem kann die negativen Auswirkungen in den vier dargestellten Angriffsszenarien erfolgreich minimieren bzw. verhindern.
- Eine Verwendung von mehreren (redundanten) FS Sicherheitsbauteilen, z.B. von zwei Radarsensoren würden einen Hackerangriff nicht verhindern, sondern nur verlangsamen.
- Erhöhte Maßnahmen im Bereich CS könnten bestenfalls die Möglichkeit eines Angriffes in eine nahe Zukunft verschieben, da jedes CS System mit der Zeit ausgehebelt werden würde. Und wenn die erste CS-Schutzbarriere durchbrochen wurde, ist es nur eine Frage der Zeit, bis auch die zweite fällt.
- Die Verschmelzung der FS mit der CS zur FCS kann auch bei nicht ordnungsgemäß aktualisierten (gepatchten), d.h. veralteten Systemen die Auswirkungen erfolgreicher Angriffe minimieren bzw. verhindern.

### ZEICHNUNGEN

Weitere Vorteile ergeben sich aus der Zeichnung und der zugehörigen Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigt:
- **Fig. 1a, 1b**: abstrakte Schaubilder einer Schutzeinrichtung in einen bestimmungsgemäßen Betriebszustand, von außen geschützt durch Mittel der Cyber-Security und von Innen durch Maßnahmen der Funktionalen Sicherheit (a), überwacht durch ein Ausführungsbeispiel der Erfindung (b);
- **Fig. 2**: ein Blockschaltbild eines mit einer Schutzeinrichtung verbundenen Überwachungssystems gemäß einem ersten Ausführungsbeispiel,;
- **Fig. 3**: ein Blockschaltbild eines in eine Schutzeinrichtung integrierten Überwachungssystems gemäß einem zweiten Ausführungsbeispiel; und
- **Fig. 4a, 4b**: Schemaskizze eines Fahrzeugs mit automatischer Distanzkontroll-Schutzeinrichtung (Fig. 4a) und ergänzt mit einem Ausführungsbeispiel eines Überwachungssystems (Fig. 4b).

In der Fig. 1a ist in einer abstrakten Schemadarstellung in Art von konzentrischen Rechtecken ein Zwiebelschalenmodell einer aus dem Stand der Technik bekannten Schutzeinrichtung dargestellt. Die Schutzeinrichtung umfasst Überwachungssensoren, eine Sicherheitssteuerung und Aktoren als Sicherheitsbauteile und befindet sich in einem "Operational Mode", der einen bestimmungsgemäßen Betrieb der Sicherheitssteuerung einer Maschine, Anlage, System repräsentiert. Nach innen gerichtet ist in der Sicherheitsüberwachung nach den Prinzipien der Funktionalen Sicherheit (FS) im Zusammenspiel der Überwachungssensoren, der Sicherheitssteuerung und der Aktoren ein Schutzsystem für Menschen und Umwelt gegen schädliche Auswirkungen bei zufälligen und systematischen Fehlern sowie der vorhersehbaren Fehlanwendung vorgesehen, Beispiele hierzu sind folgend exemplarisch, aber nicht limitierend dargestellt. Nach außen, z.B. gegenüber einem digitalen Umfeld eines Netzwerks oder Internet, aber auch gegenüber einer physischen Umgebung wird mit Mitteln der Cyber-Security (CS) versucht, externe Manipulationen, unautorisierte Veränderungen und Hackerangriffe, wie z.B. Datenmanipulation etc. durch beispielsweise verschlüsselte Datenübertragung, Passworteingaben, Gesichtserkennung etc. entgegenzutreten. Gelingt allerdings ein unautorisierter Zugriff, so kann weder die CS noch die FS eine Gefährdung der Sicherheit verhindern, da CS und FS weder interagieren, noch eine übergeordnete Überwachung zur Detektion einer Korruption vorgesehen sind.

In der Fig. 1b ist abstrakt ein Ausführungsbeispiel eines auf den FCS-Prinzipien beruhendes Überwachungssystem FCS (schraffiert) dargestellt, dass sowohl die von Angriffen nach außen schützende CS-Hülle als auch die nach innen funktionale Sicherheit bereitstellende FS-Hülle als zweite "Verteidigungslinie" schützt und gleichwohl Zugriff auf den bestimmungsgemäßen Betrieb (operational mode) der Schutzeinrichtung hat bzw. sogar eine Notsteuerung durchführen kann. Aus diesem Grund überdeckt, d.h. durchdringt graphisch das FCS zumindest bereichsweise die CS-Hülle und die FS-Hülle und überdeckt vollständig den "Operational Mode" der Schutzeinrichtung, da das FCS in einem Notfallsteuermodus in der Lage sein kann, den "Operational Mode" zu steuern. Hierzu sind den Sicherheitsbauteilen Überwachungseinheiten des FCS-Überwachungssystems beigeordnet, die über ein Kommunikationsnetzwerk mit einer Zentraleinheit verbunden sind. Im Falle eines Fehlverhaltes oder Manipulation, Hacks der CS und/oder der FS können durch logische Überprüfungen und anhand des vorgegebenen Überwachungsprotokolls eine Korruption der Schutzeinrichtung festgestellt und ein sicherer Zustand hergestellt werden, so dass eine Gefährdung von Menschen und Umwelt selbst bei Ausfällen oder Manipulationen, die weder von CS noch von FS erkannt oder verhindert werden können, abschwächt oder verhindert wird.

Beispielsweise kann in einer Schutzeinrichtung durch einen Fehler in einem Überwachungssensor ein falscher Sensorwert ausgegeben werden; bewusst durch Manipulation im Überwachungssensor ein Wert im Sensorspeicher geändert werden; bei der Sensorwertübertragung zur Sicherheitssteuerung beispielsweise über einen Datenbus geändert oder falsch eingespeist, oder in einem Speicher der den Sensorwert empfangenden und verarbeitenden Sicherheitssteuerung geändert werden. Alle diese Sensorwertverfälschungen können durch das erfindungsgemäße Überwachungssystem entdeckt und mittels Nachrichten über das Kommunikationsnetzwerk in Form von FCS-Diagnosen der Überwachungseinheiten verbreitet werden, wobei die Schutzeinrichtung in einen für den jeweiligen spezifischen Fall in einen sicheren FCS-Zustand überführt werden kann. Solche Fälle, die im Überwachungsprotokoll als FCS-Parameter hinterlegt werden können, können skalierte Reaktionen des Überwachungssystems hervorrufen. Diese können von einem ignorieren des Sensorwertes bzw. Hinzunahme redundanter Sensorwertinformationen (z.B. Ausfall des Raddrehzahlsensors für eine Geschwindigkeitsermittlung, dann Zugriff auf GPS-Sensor zur Geschwindigkeitsermittlung), über Stilllegung einzelner Betriebsfunktionen (Stopp eines Autopiloten / einer automatischen Fahrsteuerung und Aufforderung zur manuellen Steuerung) bis zum Notstop der sicherheitskritischen Anlage/Maschine/Systems führen.

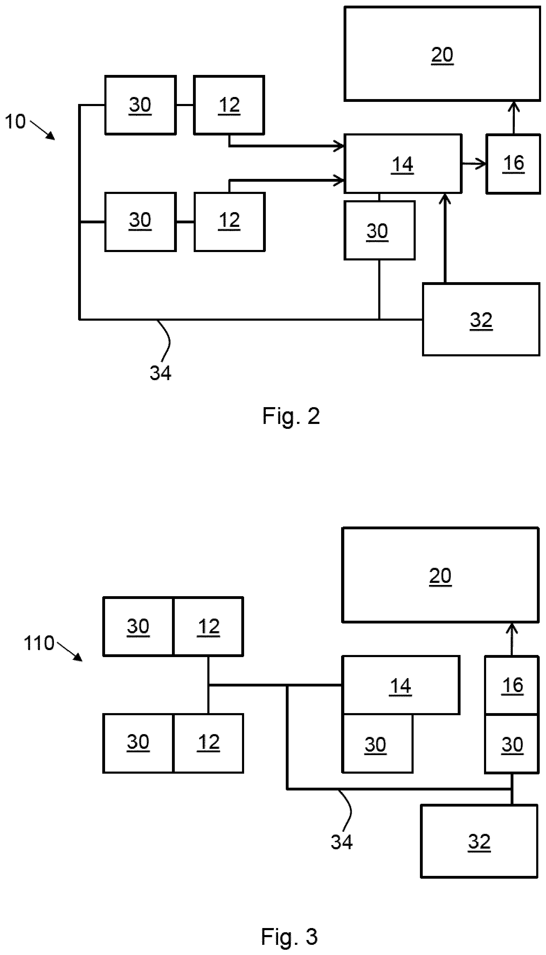

Fig. 2 zeigt ein Überwachungssystem, welches mit einer sicherheitsgerichteten Schutzeinrichtung 10 verbunden ist. Die Schutzeinrichtung 10 umfasst im Ausführungsbeispiel zwei zum Erzeugen von jeweiligen Sensorsignalen eingerichtete Überwachungssensoren 12, welche mit einer Sicherheitssteuerung 14 verbunden sind. Die Sicherheitssteuerung 14 ist zum Empfangen und Auswerten der Sensorsignale sowie zum Erzeugen und Ausgeben von Sicherheitsschaltbefehlen auf der Grundlage der Sensorsignale eingerichtet. Die Sicherheitsschaltbefehle können an einen mit der Sicherheitssteuerung 14 verbundenen Aktor 16 übermittelt werden. Der Aktor 16, welcher beispielsweise als Relais ausgebildet sein kann, ist mit einer durch die Schutzeinrichtung 10 zu überwachenden Maschine 20 verbunden, um ein Abschalten oder Anfahren der Maschine 20 zu bewirken.

Die Überwachungssensoren 12, die Sicherheitssteuerung 14 und der Aktor 16 werden nachfolgend auch allgemein als Sicherheitsbauteile bezeichnet.

Bei den Verbindungen zwischen den Überwachungssensoren 12, der Sicherheitssteuerung 14 und dem Aktor 16 kann es sich beispielsweise um eine Hartverdrahtung handeln, bei welcher Signale gemäß dem OSSD-Standard (OSSD für Englisch Output Signal Switching Device) übermittelt werden. Gemäß einer Abwandlung können diese Verbindungen jedoch auch über ein Feldbussystem wie CAN-Bus, I²C-Bus, SPI oder dergleichen erfolgen.

Bei den Überwachungssensoren 12 kann es sich beispielsweise um optoelektronische Überwachungssensoren handeln, welche dazu eingerichtet sind, einen Gefährdungsbereich der Maschine 20 berührungslos zu überwachen. Wenn beispielsweise eine Person in den Gefährdungsbereich gelangt, können ein oder mehrere Überwachungssensoren 12 ein entsprechendes Erfassungssignal erzeugen und als Sensorsignal an die Sicherheitssteuerung 14 übermitteln. Die Sicherheitssteuerung 14 kann dann wiederum einen entsprechenden Sicherheitsschaltbefehl an den Aktor 16 übermitteln, welcher wiederum ein Abschalten der Maschine 20 bewirkt.

Es versteht sich, dass auch eine geringere oder höhere Anzahl von Überwachungssensoren 12 vorhanden sein kann. Auch eine höhere Anzahl von Aktoren 16 ist selbstverständlich möglich. Weiterhin können auch andere Typen von Überwachungssensoren 12 zum Einsatz gelangen, beispielsweise magnetische Sensoren, welche zum Beispiel an der Maschine 20 angeordnete, sicherheitsrelevante Abdeckungen oder dergleichen auf ihre Schließposition überwachen, sodass bei geöffneter Abdeckung die Sicherheitssteuerung 14 gewährleistet, dass die Maschine 20 sofort abgeschaltet wird bzw. gar nicht erst in Betrieb gesetzt werden kann. Ferner ist auch ein Betrieb ohne baulich getrennte (Sicherheits-)Steuerung denkbar, so können z.B. intelligente Sensoren die Aktoren autark steuern, wie z.B. ein Laserscanner oder Näherungssensor, der direkt einen Stromversorgungsschütz schaltet, sobald sich Personen in der Nähe einer Arbeitsmaschine aufhalten.

Das erfindungsgemäße Überwachungssystem umfasst mehrere Überwachungseinheiten 30, welche jeweils mit einem Überwachungssensor 12 bzw. der Sicherheitssteuerung 14 verbunden sind. Die Überwachungseinheiten 30 sind insbesondere dazu eingerichtet, die Verbindung zu den Überwachungssensoren 12 bzw. der Sicherheitssteuerung 14 auf eine Unterbrechung hin zu überwachen, einen Betriebszustand der Überwachungssensoren 12 bzw. der Sicherheitssteuerung 14 zu ermitteln und/oder von den Überwachungssensoren 12 ausgegebene Sensorsignale zu erfassen.

Gemäß einer Abwandlung (nicht dargestellt) können der oder die Signalausgänge eines Überwachungssensors 12, an welchen die Sensorsignale für die Sicherheitssteuerung 14 ausgegeben werden, durch die zugehörige Überwachungseinheit 30 hindurchgeschleift werden, so dass die Überwachungseinheit 30 in der Lage ist, auch den Signalzustand des Überwachungssensors 12 zu überwachen und insbesondere auch festzustellen, wenn versucht wird, den Überwachungssensor 12 von der Überwachungseinheit 30 zu trennen.

Die Überwachungseinheiten 30 und eine Zentraleinheit 32 sind über ein Kommunikationsnetzwerk 34 miteinander verbunden. Das Kommunikationsnetzwerk 34 kann beispielsweise drahtgebunden oder auch drahtlos ausgebildet sein. Beispielsweise kann es sich um ein Bussystem handeln, wobei eine Kommunikation beispielsweise nach den Standards Ethernet, CAN, I²C oder dergleichen erfolgen kann.

Auf dem Kommunikationsnetzwerk 34 wird durch die Komponenten des Überwachungssystems, d.h. insbesondere durch die Überwachungseinheiten 30 und die Zentraleinheit 32, ein Überwachungsprotokoll bereitgestellt, welches einen Austausch von Nachrichten zwischen den Komponenten des Überwachungssystems ermöglicht. Mithilfe der ausgetauschten Nachrichten kann für jedes Sicherheitsbauteil, welches mit einer Überwachungseinheit 30 verbunden ist, bzw. jede Komponente des Überwachungssystems ein jeweiliger Zustand auf Übereinstimmung oder Abweichung von einem zugeordneten Sollzustand dieses Sicherheitsbauteils bzw. dieser Komponente überwacht oder überprüft werden.

Das Überwachungsprotokoll ist insbesondere dazu eingerichtet, Manipulationen oder Fehlfunktionen von einzelnen Komponenten der Schutzeinrichtung 10 bzw. des Überwachungssystems zu detektieren und gegebenenfalls bei entsprechender sicherheitskritischer Relevanz entsprechende Sicherheitsmaßnahmen durchzuführen, sodass eine Gefährdung von Personen, Sachen oder der Umwelt vermieden werden kann. Ferner stellt das Überwachungsprotokoll auch eine vorzugsweise dezentrale Protokollierung, d.h. Aufzeichnung zumindest von ausgewählten Nachrichten bereit, sodass insbesondere Änderungen, Manipulationen oder Fehlfunktionen des Gesamtsystems auch zu einem späteren Zeitpunkt nachvollzogen werden können.

Um insbesondere die Integrität des Überwachungssystems sowie der zu überwachenden Schutzeinrichtung 10 zu gewährleisten, sieht das Überwachungsprotokoll verschiedene kryptographische Mittel vor. So kann zum einen vorgesehen werden, dass die Nachrichten verschlüsselt und/oder signiert übermittelt werden. Dadurch kann gewährleistet werden, dass nur autorisierte Empfänger eine Nachricht lesen oder auswerten können, und dass insbesondere auch der Urheber oder Absender einer bestimmten Nachricht eindeutig identifiziert werden kann.

Hierbei übernimmt die Zentraleinheit 32 eine wesentliche Rolle. Sie übt sozusagen in der Initialisierungsphase die Funktion eines Masters aus, während die Überwachungseinheiten 30 als Slaves zu betrachten sind. Die Zentraleinheit kann darüber hinaus eine Überwachungseinheit beinhalten. Nach der Initialisierungsphase können die Überwachungseinheiten und ggfs. auch die Zentraleinheit autark die Einträge in der Blockchain sowie ggfs. vorhandene sonstige Nachrichten der Bauteile überwachen.

Nach der Initialisierungsphase überwachen die Überwachungseinheiten und ggfs. auch die Zentraleinheit autark die Einträge vorzugsweise in der Blockchain sowie ggfs. vorhandene sonstige Nachrichten der (Sicherheits-)Bauteile. Ein wesentlicher Gesichtspunkt für die Sicherheit besteht darin, dass nur zugelassene Komponenten in dem Überwachungssystem kommunizieren dürfen. Bei der Einrichtung eines neu konfigurierten Überwachungssystems müssen daher zunächst alle Komponenten in dem Überwachungssystem angemeldet und registriert werden. Dies kann beispielsweise dadurch erfolgen, dass die Zentraleinheit 32 zunächst in eine Konfigurationsbetriebsart versetzt wird. Dies kann durch eine Bedienperson erfolgen, welche sich hierfür authentifizieren muss, was durch geeignete Methoden wie Passwörter, Hardwaredongles oder z.B. auf einem tragbaren Speichermedium gespeicherte fälschungssichere digitale Identitätsnachweise in Form eines digitalen Schlüssels /Keys erfolgen kann.

Jede Überwachungseinheit 30 beantragt zunächst ihre Systemmitgliedschaft, indem sie eine entsprechende Anfrage unter Mitteilung einer die jeweilige Überwachungseinheit 30 eindeutig kennzeichnende Identifikationsnummer an die Zentraleinheit 32 richtet. Die Zentraleinheit 32 kann eine entsprechende Erlaubnis in Form eines fälschungssicheren Identitätsnachweises, beispielsweise in Form eines Zertifikats oder Schlüssels, welches oder welcher an die anfragende Überwachungseinheit 30 übermittelt wird, erteilen, wobei hierfür im Regelfall die Mitwirkung der Bedienperson erforderlich ist. Die fälschungssichere Identität, z.B. als Zertifikat oder als Schlüssel wird in der anfragenden Überwachungseinheit 30 gespeichert und dient dazu, von der Überwachungseinheit 30 ausgesendete Nachrichten bzw. von der Überwachungseinheit 30 empfangene Nachrichten zu verschlüsseln, zu signieren und/oder zu entschlüsseln. Die kryptographischen Mittel zur Verschlüsselung und/oder Authentifizierung umfassen insbesondere asymmetrische Kryptographieverfahren, bei denen in bekannter Weise eine Kombination aus öffentlichen und privaten Schlüsseln zur Anwendung gelangt. Derartige kryptographische Verfahren sind allgemein bekannt und werden an dieser Stelle nicht eingehender erläutert.

Nach Beendigung der Konfigurationsbetriebsart, d.h. wenn alle Komponenten des Überwachungssystems ihr jeweiliges Zertifikat oder Schlüssel als fälschungssichere Identität erhalten haben und gegebenenfalls ein Verteilen oder Verbreiten der im Überwachungssystem vorhandenen öffentlichen Schlüssel an alle Komponenten vorgenommen wurde, kann das Überwachungssystem in die Überwachungsbetriebsart versetzt werden. In dieser Betriebsart kann insbesondere vorgesehen sein, dass die Komponenten des Überwachungssystems, d.h. insbesondere die Überwachungseinheiten 30, in bestimmten Abständen Nachrichten mit Statusmeldungen aussenden, die von der Zentraleinheit 32, aber auch von anderen Überwachungseinheiten 30 empfangen werden können. Das Aussenden dieser Statusmeldungen kann beispielsweise in vorgegebenen zeitlichen Abständen erfolgen, wobei diese zeitlichen Abstände beispielsweise als Betriebsparameter während der Konfigurationsbetriebsart von der Zentraleinheit 32 an die jeweilige Überwachungseinheit 30 übermittelt wurden. So kann beispielsweise vorgesehen sein, dass je nach Funktion und/oder Sicherheitsrelevanz eines bestimmten von einer Überwachungseinheit 30 überwachten Sicherheitsbauteils die Häufigkeit dieser Statusmeldungen variieren kann.

Alternativ kann auch eine Abfrage zumindest eines Teils der Überwachungseinheiten 30 durch beispielsweise die Zentraleinheit 32 und/oder eine andere Überwachungseinheit 30 erfolgen, d.h. die entsprechenden Nachrichten mit einer Statusmeldung werden auf Anfrage übermittelt.

Eine jeweilige von einer Überwachungseinheit 30 ausgesendete Statusmeldung kann neben Informationen über die Identität der Überwachungseinheit 30 bzw. des überwachten Sicherheitsbauteils auch einen Signalisierungszustand umfassen, welche insbesondere das von einem Überwachungssensor 12 ausgegebene Sensorsignal repräsentieren. Wenn die mit der Sicherheitssteuerung 14 verbundene Überwachungseinheit 30 Nachrichten versendet, welche auch Informationen über die empfangenen Sensorsignale enthalten, übermittelt, kann die Zentraleinheit einen Vergleich dieser Nachrichten durchführen, um gegebenenfalls Diskrepanzen zwischen den von der Sicherheitssteuerung 14 empfangenen Sensorsignalen und den vorgeblich, d.h. laut Statusmeldung von den Überwachungseinheiten 12 ausgesendeten Sensorsignalen festzustellen und entsprechende Sicherungsmaßnahmen einzuleiten.

Wenn eine oder mehrere erwartete Nachrichten fehlen, so kann ebenfalls eine entsprechende Sicherheitsmaßnahme erfolgen.

Wenn die Zentraleinheit 32 und/oder eine oder mehrere Überwachungseinheiten 30 eine oder mehrere Nachrichten von einer Überwachungseinheit 30 empfängt, für die die Zentraleinheit 32 keinen gültigen Identitätsnachweis besitzt, und/oder die Nachrichten unzulässige, insbesondere nicht durch die Zentraleinheit 32 autorisierte Signaturen aufweisen, kann die Zentraleinheit 32 und/oder jede Überwachungseinheit 30 dies als Manipulationsversuch betrachten und ebenfalls geeignete Sicherheitsmaßnahmen einleiten. Darüber hinaus können die Sicherheitsmaßnahmen erfolgen, wenn nicht autorisierte Identitäten festgestellt werden.

Für diese Sicherheitsmaßnahmen kommen mehrere Möglichkeiten in Betracht. So kann die Zentraleinheit 32, wenn sie beispielsweise eine Diskrepanz bei den Sensorsignalen feststellt oder eine Statusmeldung eines bestimmten Überwachungssensors 12 eine Fehlfunktion des Überwachungssensors 12 signalisiert, diesen Überwachungssensor 12 über die zugeordnete Überwachungseinheit 30 in einen Zustand versetzen, in dem der Überwachungssensor 12 ein vorgegebenes Alarmierungssensorsignal erzeugt. Wenn beispielsweise der Überwachungssensor 12 im Regelbetrieb ein Sensorsignal im Bereich von 4-20 mA ausgibt, kann das Alarmierungssensorsignal darin bestehen, dass der Sensor nunmehr ein Ausgangssignal von 0 mA an die Sicherheitssteuerung 14 übermittelt. In dem Fall bleibt es der Sicherheitssteuerung 14 überlassen, die entsprechend dafür vorgesehenen und hinterlegten Sicherheitsmaßnahmen zu treffen. So kann beispielsweise zunächst ein Abgleich mit anderen Überwachungssensoren 12 erfolgen. Alternativ kann auch eine sofortige Abschaltung der überwachten Maschine 20 erfolgen. Es ist also nicht erforderlich, dass die notwendigen Sicherheitsmaßnahmen im Überwachungssystem programmiert werden müssen. Es wird in dem Fall auf die in der Schutzeinrichtung 10 hinterlegten Mechanismen zurückgegriffen.

Alternativ oder zusätzlich kann die Zentraleinheit 32 bzw. eine andere Überwachungseinheit 30, welche eine Fehlfunktion oder Diskrepanz festgestellt hat, eine entsprechende, die Abweichung signalisierende Nachricht an eine oder mehrere Komponenten des Überwachungssystems aussenden. Diese Nachricht kann dazu dienen, dass ein oder mehrere Überwachungseinheiten 30 entsprechende Maßnahmen bei den von ihnen überwachten Sicherheitsbauteilen einleiten.

Schließlich kann auch die Zentraleinheit 32 selbst auf die Sicherheitssteuerung 14 einwirken. Hierfür kann die Zentraleinheit 32 über eine direkte Verbindung zur Sicherheitssteuerung 14, beispielsweise über einen Sensoreingang der Sicherheitssteuerung 14, auf diese einwirken.

Ein besonderer Aspekt der vorliegenden Erfindung besteht darin, dass alle oder zumindest ein wesentlicher Teil der in dem Kommunikationsnetzwerk ausgetauschten Nachrichten protokolliert oder gespeichert werden. Dieses Protokollieren oder Speichern erfolgt mittels einer Blockchain. Bei einer Blockchain handelt es sich um eine kontinuierlich erweiterbare Liste von als Blöcke bezeichneten Datensätzen, welche mittels kryptographischer Verfahren miteinander verkettet sind. Jeder Block kann typischerweise einen kryptographisch sicheren Hash-Wert des vorhergehenden Blocks, einen Zeitstempel und Zustandsdaten umfassen.

Die Blockchain wird zumindest in der Zentraleinheit gespeichert, wobei bevorzugt auch weitere Instanzen der Blockchain zumindest in einem Teil der Überwachungseinheiten 30 gespeichert werden. Vorzugsweise erfolgt die Speicherung der Blockchain bzw. Instanzen der Blockchain in allen Komponenten des Überwachungssystems.

Mithilfe einer solchen Blockchain-Protokollierung kann eine besonders hohe Sicherheit gegenüber Manipulationen erreicht werden. Sollte ein unbefugter Austausch oder eine unbefugte Manipulation eines Sicherheitsbauteils und der damit verbundenen Überwachungseinheit 30 erfolgt sein, würde dies zur Folge haben, dass die in dieser Überwachungseinheit 30 gespeicherte Blockchain-Instanz von den übrigen Blockchain-Instanzen im Überwachungssystem abweichen würde. Durch einen regelmäßigen Abgleich der Blockchain-Instanzen, was beispielsweise durch einen Austausch von Hash-Werten erfolgen kann, kann eine solche Diskrepanz festgestellt werden und das zugehörige Sicherheitsbauteil als korrupt identifiziert werden.

Ein wesentlicher Sicherheitsaspekt besteht für eine Speicherung der Blockchain-Instanzen in allen oder zumindest einem großen Teil der Komponenten des Überwachungssystems darin, dass nicht nur die Zentraleinheit 32, sondern auch andere Überwachungseinheiten 30 einen etwaigen Manipulationsversuch aufdecken können. Für eine Manipulation eines derart gesicherten Überwachungssystems müssten demnach nicht nur einzelne Komponenten des Systems manipuliert werden, sondern sämtliche Komponenten, was einen kaum zu überwindenden Aufwand darstellt.

Die Blockchain enthält insbesondere auch Informationen über die von der Zentraleinheit 32 zugelassenen Komponenten des Überwachungssystems, beispielsweise in Form der öffentlichen Schlüssel aller im Überwachungssystem zugelassenen Komponenten.

Die vorstehend genannte Speicherung des Zertifikates bzw. des Schlüssels, insbesondere eines privaten Schlüssels, in den Überwachungseinheiten 30 bzw. der Zentraleinheit 32 kann insbesondere mithilfe eines speziell geschützten Chips, beispielsweise eines TPM (für Englisch Trusted Platform Modul) erfolgen. Mithilfe eines geeigneten sicheren Authentifizierungsverfahrens, beispielsweise mittels des sogenannten Challenge-Response-Verfahrens, kann durch eine jeweilige Komponente festgestellt werden, ob eine andere Komponente im Besitz des passenden privaten Schlüssels ist, welcher dem öffentlichen Schlüssel, der in dem Überwachungssystem, insbesondere in der Blockchain, für die zu überprüfende Komponente hinterlegt ist. Bei dem Challenge-Response-Verfahren stellt eine anfragende Komponente eine Aufgabe an die zu überprüfende Komponente, die diese lösen muss, um zu beweisen, dass die zu überprüfende Komponente eine bestimmte Information kennt, ohne diese Information selber zu übertragen.

Grundsätzlich ist es nicht zwingend, dass alle in dem Kommunikationsnetzwerk 34 ausgetauschten Nachrichten auch in der Blockchain gespeichert werden. So kann global oder individuell für jede Komponente des Überwachungssystems eine Prioritätsebene festgelegt werden, ab welcher eine Speicherung in der Blockchain erfolgt. So könnten beispielsweise für weniger sicherheitsrelevante Sicherheitsbauteile eine höhere Ebene festgelegt werden, sodass nur besonders kritische Nachrichten protokolliert werden. Für andere Sicherheitsbauteile, deren Sicherheitsrelevanz sehr hoch ist, könnte eine niedrigere Ebene festgelegt werden, sodass auch weniger sicherheitskritische Nachrichten der diesem Sicherheitsbauteil zugeordneten Überwachungseinheit 30 protokolliert werden.

Das mit Bezug auf Fig. 2 beschriebene Überwachungssystem eignet sich insbesondere auch zur Nachrüstung einer bestehenden, bereits eingerichteten Schutzeinrichtung 10. Das Überwachungssystem stellt sozusagen eine Hülle dar, welche die bestehende Schutzeinrichtung 10 zur Feststellung der Integrität, d.h. zur Überprüfung auf Manipulation oder Korruption, und zur Zustands- und Verlaufsprotokollierung überwacht. Die eigentliche Funktionalität der Schutzeinrichtung 10 wird von dem Überwachungssystem nicht beeinflusst oder zumindest nur insoweit, dass bei einer festgestellten Abweichung von einem Sollzustand Maßnahmen eingeleitet werden, die die Sicherheit eines von der Schutzeinrichtung 10 überwachten Systems oder einer Maschine 20 gewährleisten.

Mit Bezug nun auf Fig. 3 wird ein weiteres Ausführungsbeispiel eines erfindungsgemäßen Überwachungssystems erläutert. Das dort dargestellte Überwachungssystem und die damit überwachte Schutzeinrichtung 110 entsprechen in ihrem Aufbau und ihrer Funktionalität im Wesentlichen dem Überwachungssystem bzw. der Schutzeinrichtung 10 von Fig. 2. Daher wurden für gleiche oder gleichartige Elemente auch gleiche Bezugszeichen vergeben. Die maßgeblichen Unterschiede zwischen den beiden Ausführungsbeispielen werden nachfolgend erläutert.

Im Unterschied zum ersten Ausführungsbeispiel sind die Sicherheitsbauteile, d.h. die Überwachungssensoren 12 und die Sicherheitssteuerung 14 mit einer jeweiligen Überwachungseinheit 30 zu einem integrierten Bauteil verbunden. Zusätzlich ist nun auch der Aktor 16 über eine ebenfalls integrierte Überwachungseinheit 30 in das Überwachungssystem integriert.

Ein weiterer Unterschied besteht darin, dass die Signalisierung zwischen den Sicherheitsbauteilen, d.h. die Übertragung der Sensorsignale zwischen den Überwachungssensoren 12 und der Sicherheitssteuerung 14 sowie die Übertragung der Sicherheitsschaltbefehle zwischen der Sicherheitssteuerung 14 und dem Aktor 16, sowie der Austausch der Nachrichten über ein gemeinsam genutztes Kommunikationsnetzwerk, beispielsweise über ein gemeinsames Bussystem erfolgt, d.h., das Kommunikationsnetzwerk 34 ist Bestandteil des Bussystems der Schutzeinrichtung 110. Das Kommunikationsnetzwerk kann beispielsweise als Feldbussystem oder beliebiges anderes Bussystem ausgestaltet sein.

Durch die Integration der Sicherheitsbauteile in die Komponenten des Überwachungssystems kann eine noch höhere Manipulationssicherheit erreicht werden. Zugleich vereinfacht sich der Installationsaufwand.

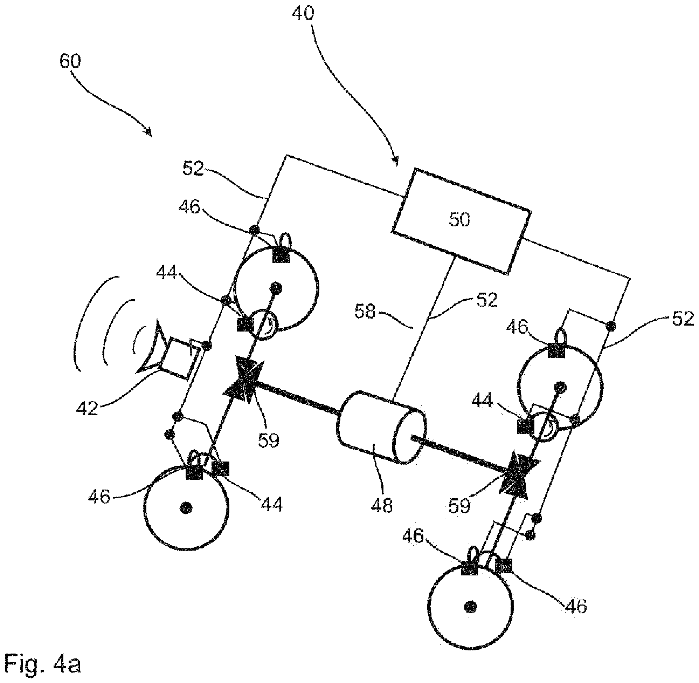

In der Fig. 4a ist schematisch ein Fahrzeug 60 dargestellt, das eine automatische Distanzkontroll-Schutzeinrichtung 40, d.h. einen Abstandsregeltempomat (ACC - Adaptive Cruise Control) umfasst. Hinter der Bezeichnung ACC verbirgt sich ein Abstandsregeltempomat, der den Abstand eines Fahrzeuges zu dem vorausfahrenden Fahrzeug regelt, und somit eine Kollision verhindert. Die Distanzkontroll-Schutzeinrichtung 40 misst über eine radarbasierten Abstandssensor 42 eine Position, Entfernung und die Geschwindigkeit eines vorausfahrenden Fahrzeuges und mittels Raddrehzahlsensoren 44 die eigene Geschwindigkeit. Die Geschwindigkeit des eigenen, allradangetriebenen Fahrzeuges 60 mit einem, durch einen Antriebsmotor 48 alle Fahrzeugachsen antreibenden Antriebsstrang 59 wird daraufhin via Eingriff in den Antriebsmotor 48 und in die Bremsenaktuatoren 46 entsprechend angepasst, um einen konstanten Abstand zu halten oder einen Minimalabstand nicht zu unterschreiten. Hierzu ist der Antriebsmotor 48 und die Bremsenaktuatoren 46 sowie die Raddrehzahlsensoren 44 und der Abstandssensor 42 über einen CAN-Bus 52 mit einer Sicherheitssteuerung (z.B. ECU) 50 verbunden, die eine Abstandsregelung durchführt.

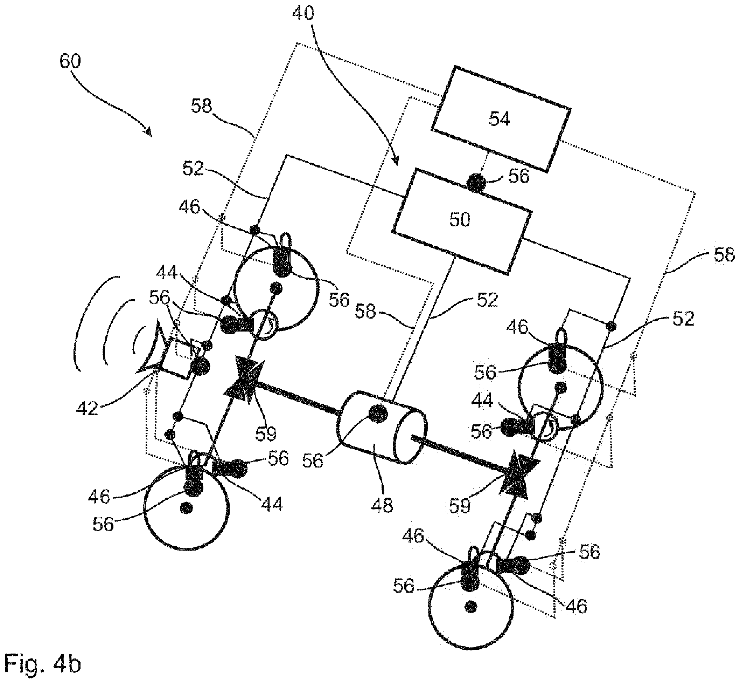

Wie in der weitergehenden Fig. 4b dargestellt, ist der in der Fig. 4a gezeigten Distanzkontroll-Schutzeinrichtung 40 ein Überwachungssystem übergeordnet, dass eine Zentraleinheit 54, ein Kommunikationsnetzwerk 58 (mit punktierten Linien) und eine Vielzahl von Überwachungseinheiten 56 umfasst. Den Sensoren 42, 44 und den Aktoren 46, 48 sowie der Sicherheitssteuerung 50 sind jeweils eine Überwachungseinheit 56 zugeordnet. Über das Kommunikationsnetzwerk 58 sind die Überwachungseinheiten 56 mit der Zentraleinheit 54 verbunden. Periodisch oder aperiodisch melden die Überwachungseinheiten 54 den Zustand und Identität der mit ihnen verbundenen Aktoren 46, 48, Überwachungssensoren 42, 44 und der Sicherheitssteuerung 50. Des Weiteren können die Überwachungseinheiten 56 einen internen Zustand z.B. der Aktoren 46, 48 beeinflussen, z.B. einen Eingriff der Bremsaktuatoren 46 ermöglichen oder die Leistung des Antriebsmotors 48 bestimmen. Das Kommunikationsnetzwerk 58 kann ein physikalisch getrenntes Netzwerk sein, aber auch physikalisch auf dem bereits vorhandenen CAN-Bus 52 des Fahrzeugs aufsetzen und Nachrichten vorzugsweise signiert und/oder verschlüsselt an die Zentraleinheit 54 übermitteln.

Wird beispielsweise durch einen Hackereingriff auf dem CAN-Bus 52, der gleichwohl physikalisch Nachrichten des Kommunikationsnetzwerks 58 übertragen kann, Sensorwerte des Abstandssensors 42 mutwillig geändert, so kann die Zentraleinheit 54 feststellen, dass abweichende Abstandswerte von der, dem Abstandssensors 42 zugeordneten, Überwachungseinheit 56 und der, der Sicherheitssteuerung 54 zugeordneten Überwachungseinheit 56 vorliegen. Das in der Zentraleinheit 54 vorliegende Überwachungsprotokoll kann für diesen Fall vorsehen, dass ein sofortiges Deaktivieren der automatischen Distanzkontrolle dem Fahrer signalisiert und die Sicherheitssteuerung 50 der Distanzkontroll-Schutzeinrichtung 40 abgeschaltet wird. Hierdurch wird verhindert, dass es zu einem ungewollten Auffahrunfall kommt, der durch einen Hackereingriff, z.B. über einen Internetgateway eines vernetzten Fahrzeugs (Connected Car, Car2Car Communication) erfolgt ist.

Nachfolgend sollen weitere Ausführungsbeispiele eines erfindungsgemäßen FCS-Überwachungssystems exemplarisch, allerdings nicht abschließend, dargestellt werden, die Angriffe und deren Abwehr auf Basis des FCS-Überwachungssystems aufgrund von Hacken, Manipulation sowie fehlerhafter Wartung der betroffenen FS Schutzeinrichtungen bzw. des darin eingesetzten CS veranschaulichen.

### Ausführunasbeispiel: Kernkraftwerk

Eine Sicherheitsfunktion der Schutzeinrichtung besteht in einem Herunterfahren der Brennelemente ins Wasserbecken bei Störung. Ein sicherer Zustand, ggf. auch ein möglicher FCS-Zustand besteht darin, dass die Brennelemente vollständig im Wasser versenkt sind. Die Schutzeinrichtung umfasst hierzu Überwachungssensoren, Sicherheitssteuerung, Aktorik und ist in der Regel als SCADA-Steuerung ausgeführt. Unter einer SCADA-Steuerung (Supervisory Control and Data Acquisition) versteht man im Folgenden eine Schutzeinrichtung zum Überwachen und Steuern technischer Prozesse mittels eines Computer-Systems.

Eine Manipulation / Angriff kann darin bestehen, dass die (SCADA-)Steuerung des Kernkraftwerkes über einen infizierten USB-Stick von einem Angreifer übernommen oder korrumpiert wird. Der Angreifer fährt die Brennelemente aus dem Wasser und löscht anschließend das gesamte (SCADA-)Steuerungsprogramm, sodass es zu einer Kernschmelze kommen könnte. Ein Einschreiten aufgrund des kompletten (SCADA-)Steuerungsausfalls ist kaum mehr möglich. Im Überwachungssystem kann als FCS-Parameter im Überwachungsprotokoll hinterlegt sein, dass eine Manipulation oder Hack eines Sicherheitsbauteils augenblicklich zur Herstellung des FCS-Zustandes führen soll. Der FCS-Zustand kann bei Manipulation/Bauteilausfall darin bestehen, eine Notsteuerung der Schutzeinrichtung über das FCS-Kommunikationsnetzwerk und die Überwachungseinheiten proprietär zu ermöglichen, um eine minimale Stromversorgung zu gewährleisten.

Alternativ kann bei Feststellung eines Hacks durch eine Überwachungseinheit oder die Zentraleinheit, die einen ungewöhnlichen Zustand der Sicherheitsbauteile feststellt, die Herstellung des sicheren Zustands (z.B. Brennelemente vollständig in Wasser fahren) sowie die weiteren Aktionen des FCS-Zustand inkl. (Deaktivierung aller Aktorik und ggf. Zerstörung oder Isolation des gehackten Bauteiles) erfolgen, um eine Ausbreitung eines Computervirus zu verhindern.

Beispielsweise kann das FCS-Überwachungssystem den Hackerangriff z.B. über eine Rechteerweiterung des aktuellen Benutzers oder über Änderungen im RAM und / oder ROM des SCADA-Steuerungssystems erkennen. Da es sich um einen Hackerangriff handelt, werden die Brennelemente ins Wasserbecken gelassen.

Anschließend wird eine Sicherheitssicherung der (SCADA-)Steuerung abgeschaltet, um den Hackerangriff zu begrenzen bzw. zu stoppen.

### Ausführunasbeispiel: Luft- und Raumfahrt sowie andere Transportmittel

Eine Sicherheitsfunktion der Schutzeinrichtung besteht in einem zuverlässigen Arbeiten des Autopiloten. Ein sicherer Zustand, ggf. auch ein möglicher FCS-Zustand besteht darin, dass eine Alarmierung der Piloten und Umschalten auf manuelle Steuerung erfolgt, sobald eine Unzuverlässigkeit des Autopiloten erkannt wird.

Eine Manipulation / Angriff kann darin bestehen, dass über das Infotainmentsystem ein im Flugzeug befindlicher Hacker in das interne Flugzeugnetzwerk gelangt und z.B. den Autopiloten oder andere sicherheitskritische Systeme manipuliert. Im Überwachungssystem kann als FCS-Parameter im Überwachungsprotokoll hinterlegt sein, dass bei Hack oder Manipulation eines Bauteiles der Sicherheitskette ein FCS-Zustand sofort hergestellt wird. Ein hierzu vorgesehener FCS-Zustand kann eine Alarmierung der Piloten und dauerhaftes Umschalten auf manuelle Steuerung sowie automatische Alarmierung der Flugsicherung umfassen.

Ein Ausbruch aus dem Infotainmentsystem wird durch die FCS-Diagnose direkt auf dem Infotainmentsystem erkannt, da das Infotainmentsystem einen Verbindungsversuch zu Ziel-Adressen unternimmt, welche nicht als FCS Parameter hinterlegt sind. Als Reaktion des FCS Überwachungssystems erfolgt eine sofortige Deaktivierung der Konsole, Information an den Sky-Marshal und Übergang in den vorbeschriebenen sicheren Zustand.

Das exemplarische Beispiel ist auch auf andere Transportmittel zu Lande, zu Wasser und in der Luft, die (autonome) Navigations- und Steuerungssysteme nutzen, wie z.B. PKW, LKW, Busse, Züge oder Schiffe übertragbar.

### Ausführungsbeispiel: Fahrzeuge, insbesondere eBikes / Mofa / Autotuning

Eine Sicherheitsfunktion der Schutzeinrichtung besteht in einer Einhaltung der Maximalgeschwindigkeit. Ein sicherer Zustand, ggf. auch ein möglicher FCS-Zustand besteht darin, dass der Motor ausgeschaltet wird. Die Schutzeinrichtung umfasst hierzu Geschwindigkeitsmesser, µP, Motoransteuerung.

Eine Manipulation / Angriff kann darin bestehen, dass ein Standartbauteil durch ein getuntes oder gefälschtes Bauteil ersetzt wird, um schneller fahren zu können. Im Überwachungssystem kann als FCS-Parameter im Überwachungsprotokoll hinterlegt sein, dass bei einer FCS-Diagnose einer Überwachungseinheit der FCS-Zustand eingenommen wird. Ein dieser FCS-Diagnose durch den FCS-Parameter zugeordneter FCS-Zustand kann in einem Einschalten des Warnblinkers, langsame Reduktion der Geschwindigkeit auf null, permanentes Abschalten des Motors, umfassen.

Durch Einbau des gefälschten Bauteiles fehlt die Verschlüsselungssignatur der dazugehörigen FCS-Diagnose. Der FCS-Zustand wird nach einem im FCS-Parameter festgelegten Zeitintervall eingenommen, der im Optimalfall greift, bevor das Fahrzeug starten kann.

### Ausführungsbeispiel: Autonome Waffen

Eine Sicherheitsfunktion der Schutzeinrichtung besteht in einer Vermeidung von Friendly Fire und in einer Aktivierung nur im Kampfgebiet. Ein sicherer Zustand, ggf. auch ein möglicher FCS-Zustand besteht in einer vollständigen Deaktivierung der Waffenfunktion. Die Schutzeinrichtung umfasst hierzu GPS-Sensor, Sicherheitssteuerung, Waffenfreigabe.

Eine Manipulation / Angriff kann darin bestehen, dass mittels Umverdrahtung, Austausch oder Überbrückens des alten GPS-Sensors eine Fälschung des GPS-Signals erfolgt, um einen falschen Standort vorzutäuschen. Im Überwachungssystem kann als FCS-Parameter im Überwachungsprotokoll hinterlegt sein, dass bei einer FCS-Diagnose einer GPS-Datenfälschung der folgende FCS-Zustand eingenommen wird: Vollständige und permanente Deaktivierung der Waffenfunktion sowie Zerstörung der internen Bauteile (beispielsweise des µP, RAM, ROM).

Das Überbrücken des GPS-Sensors wird durch die Überwachungseinheit erkannt mittels Vergleich des RAM-Inhalt des original GPS-Sensors und dem Werteeingang in die Sicherheitssteuerung oder durch einem Sprung der Positionsdaten in einem Zeitintervall, der einen physikalischen Transport unmöglich macht. Als Reaktion instanziert das FCS Überwachungssystem den vordefinierten FCS-Zustand der Schutzeinrichtung.

### Ausführungsbeispiel: Pistole

Eine Sicherheitsfunktion der Schutzeinrichtung besteht in einer Deaktivierung bei unberechtigtem Zugriff (z.B. personen- oder zeitabhängig). Ein sicherer Zustand, ggf. auch ein möglicher FCS-Zustand besteht darin, dass der Abzug verriegelt und eine Schussabgabe deaktiviert wird. Die Schutzeinrichtung umfasst hierzu: Fingerabdrucksensor, NTP-Client, GSM-Modul, µP, Verriegelung.

Eine Manipulation / Angriff kann darin bestehen, dass der Fingerabdrucksensor manipuliert oder eine falsche Zeit vorgetäuscht wird. Im Überwachungssystem kann als FCS-Parameter hinterlegt sein, dass bei einer entsprechenden FCS-Diagnose, wobei eine Überwachungseinheit beispielsweise eine eigene interne Uhr abgleicht, oder erkennt, dass seit längerem der Fingerabdrucksensor immer dasselbe Identifikationssignal ausgibt, obwohl nachweislich verschiedene Personen die Waffe geführt haben, führt zur Herstellung des folgenden FCS-Zustandes: Verriegelung Abzug und Deaktivierung bis eine neue FCS-Parametrierung des Überwachungsprotokolls durchgeführt wird

So kann ein Brücken des Fingerabdrucksensors durch einen Datenabgleich im FCS-Kommunikationsnetzwerk (Sensoreingang Fingerabdrucksensor vs. Übermittlung an µP) festgestellt werden. Auch kann z.B. bei einem Wartungsintervall festgestellt werden, dass weiterhin der Fingerabdrucksensor dieselbe Identifikation erkennt, obwohl nachweislich eine andere Person die Waffe führt. Ein FCS-Zustand wird in diesem Fall sofort eingenommen.

Im Falle eines Uhrzeitvergleich der Zeit wird ein Abgleich nicht in der Pistole selber, sondern z.B. durch Vergleich mit anderen Pistolen und / oder Zugriff auf eine Cloud eines vernetzten, übergreifenden Kommunikationsnetzwerks, in der Überwachungseinheiten verschiedener Personen Zugriff haben, realisiert. Wird eine Abweichung von den FCS-Diagnosen verschiedener Pistolen festgestellt, wird der vorbeschriebene FCS-Zustand eingenommen.

### Ausführungsbeispiel: Roboter

Eine Sicherheitsfunktion der Schutzeinrichtung besteht in einer Bereichsbegrenzung der Roboterbewegung, z.B. Drehung nur um 270° zulässig. Ein sicherer Zustand, ggf. auch ein möglicher FCS-Zustand besteht in einem sofortigen Stopp jeder Aktorik. Die Schutzeinrichtung umfasst hierzu einen induktiven Sicherheitssensor, Sicherheitssteuerung, Relais.

Eine Manipulation / Angriff kann darin bestehen, dass der Sicherheitssensor während einer Wartung durch einen Standardsensor ausgetauscht wird. Im Überwachungssystem kann als FCS-Parameter hinterlegt sein, dass eine entsprechende FCS-Diagnose zu folgendem FCS-Zustand führt: Sofortiger Stopp jeder Aktorik und Verhinderung eines Wiederanlaufens.

Der ausgetauschte Sensor wird von der Sicherheitssteuerung nicht erkannt, da er die gleichen Signale liefert wie der bisherige Überwachungssensor. Allerdings wird keine FCS-Diagnose durch den neuen Sensor ausgegeben, sodass keine zyklische Nachricht in das FCS-Kommunikationsnetzwerk ausgesandt werden kann. Nach Ablauf einer maximal zulässigen Zeit für die Nachrichtenübermittlung der Nachricht zur FCS-Diagnose des fehlenden Sicherheitssensors wird der FCS-Zustand eingenommen.

### Beispiel Medizintechnik: Infusionspumpe

Eine Sicherheitsfunktion der Schutzeinrichtung besteht in der Applizierung des Medikamentes in einer exakten Dosierung, die nicht zu hoch oder zu niedrig sein darf. Ein sicherer Zustand, ggf. auch ein möglicher FCS-Zustand besteht darin, dass eine Alarmierung bei Fehlfunktion ausgelöst wird. Die Schutzeinrichtung umfasst hierzu einen Rotationssensor, µP, Pumpenrelais.

Eine Manipulation / Angriff kann darin bestehen, dass über das Kliniknetzwerk ein Hacker die Infusionspumpe hackt und die Infusionsmenge auf den zehnfachen Wert einstellt.

Im Überwachungssystem kann als FCS-Parameter im Überwachungsprotokoll hinterlegt sein, dass bei Manipulation eines Bauteils der folgende FCS-Zustandes eingenommen wird: Notsteuerung der Infusionspumpe mittels des FCS-Kommunikationsnetzwerk / FCS-Systems unter Verwendung des letzten gültigen Parameters aus der Blockchain; Alarmierung des Klinikpersonals.

Der Hackerangriff auf den µP wird z.B. mittels Hashanalyse des RAMs und oder ROMs durch die jeweilige FCS-Diagnose der Überwachungseinheit der Pumpen-Steuerungseinheit festgestellt. Dieser Hackversuch wird dem Kommunikationsnetzwerk mitgeteilt, wodurch auf Basis dieser FCS-Diagnose die Zentraleinheit mittelbar über die jeweilige Überwachungseinheit die Kontrolle über die Sicherheitsbauteile übernimmt. Die gültigen Parameter (Infusionsmenge, Zeitraum, ...) werden der Blockchain als FCS-Parameter entnommen. Ferner wird das Klinikpersonal über ein optisches und akustisches Warnsignal sowie eine Warnmeldung über ein klinikinternes Informationsnetzwerk über den Hackerangriff alarmiert.

### Ausführunasbeispiel: Spanbearbeitunaszentrum im Maschinenbau

Eine Sicherheitsfunktion der Schutzeinrichtung besteht in einer Abschaltung bei Unterdruck (1,1 bar) des Kühlwassers. Ein sicherer Zustand, ggf. auch ein möglicher FCS-Zustand besteht darin, dass jegliche Aktorik ausgeschaltet wird. Die Schutzeinrichtung umfasst hierzu einen Drucksensor, Sicherheitssteuerung, Aktorik.

Eine Manipulation / Angriff kann darin bestehen, dass während der Wartung ein defekter Drucksensor durch einen baugleichen, neuen Drucksensor ausgetauscht wird. Jedoch wurde vergessen, den Schaltwert des Sensors von 10 bar (Default Wert) auf 1,1 bar zu parametrisieren. Im Überwachungssystem kann als FCS-Parameter im Überwachungsprotokoll hinterlegt sein, dass eine entsprechende FCS-Diagnose zu folgendem FCS-Zustand führt: Abschaltung jeglicher Aktoren und Verhinderung eines Wiederanlaufs.

Die Sicherheitssteuerung kann eine falsche Programmierung des PNP-Schaltausgangs des Drucksensors nicht feststellen. Bei Austausch des Drucksensors wurde die neue FCS-Diagnose des neuen Drucksensors von FCS-Kommunikationsnetzwerk nach Abgleich der kryptographischen Schlüssel und Kennung ins Überwachungssystem und dessen Kommunikationsnetzwerk aufgenommen und die Blockchain übertragen. Nun erkennt die FCS-Diagnose des neuen Drucksensors durch Vergleich mit der übertragenen Blockchain, dass der eingestellte Druckwert (durch Auslesen des RAMs) nicht mit dem Wert aus der Blockchain übereinstimmt. Somit wird der hierfür vorgesehene FCS-Zustand eingenommen.

### Ausführungsbeispiel: Chemieanlage

Eine Sicherheitsfunktion der Schutzeinrichtung besteht in einem Überfüllschutz eines Tanks. Ein sicherer Zustand, ggf. auch ein möglicher FCS-Zustand besteht darin, dass der Befüllungsvorgang gestoppt wird. Die Schutzeinrichtung umfasst hierzu Füllstandsensor, Prozessleitsystem, Pumpenrelais

Eine Manipulation / Angriff kann darin bestehen, dass versucht wird, alle Sicherheitsbauteile der Betankungseinrichtung zu übernehmen, um den Tank überlaufen zu lassen, was eine Explosion in der Chemieanlage zu Folge haben könnte. Im Überwachungssystem kann als FCS-Parameter hinterlegt sein, dass wenn bei maximaler Befüllung des Tanks der Befüllvorgang fortgesetzt wird, eine entsprechende FCS-Diagnose zu folgendem FCS-Zustand führt: Deaktivierung des Pumpenrelais, bis das FCS-Überwachungssystem zurückgesetzt wird, z.B. durch Neuprogrammierung. Ein Angriff/Manipulation auf einzelne Sicherheitsbauteile ist zu ignorieren, um Fehlalarme so gut wie möglich auszuschließen, wg. entsprechendem Kostendruck.

Das Überwachungssystem erkennt die Angriffe auf die einzelnen Sicherheitsbauteile und die Sicherheitssteuerung. Aufgrund der eingestellten FCS-Parameter wird jedoch nichts unternommen. Der Grund hierfür ist, dass die Sicherheitsbauteile und das Sicherheitssteuerung auch im normalen Betrieb aufgrund von Optimierungsprozessen immer wieder verändert werden, sodass ein fälschlicherweise detektierter "Angriff" die Produktion unzumutbar häufig lahmlegen würde.

Erst als erkannt wird, dass die Sensorik des Füllstandsensors einen vollen Tank meldet, die Sicherheitssteuerung die Aktorik aber nicht ausschalten will, trennt eine dem Pumpenrelais zugeordnete Überwachungseinheit aufgrund einer in einer Nachricht entsprechende FCS-Diagnose vom Netz, und stellt so den sicheren Zustand her. Die Zentraleinheit teilt ferner allen Überwachungseinheiten mit, zumindest alle Aktoren enthaltende Sicherheitsbauteile abzuschalten.

### Ausführungsbeispiel: Mikrowelle, auch übertragbar auf weitere Haushaltsgeräte wie Waschmaschine, Trockner etc.

Eine Sicherheitsfunktion der Schutzeinrichtung besteht in einer Abschaltung der Mikrowellenstrahlung vor dem Öffnen der Tür. Ein sicherer Zustand, ggf. auch ein möglicher FCS-Zustand besteht darin, dass das Magnetron ausgeschaltet wird. Die Schutzeinrichtung umfasst hierzu Türsensor, Sicherheitssteuerung, Magnetron.

Eine Manipulation / Angriff kann darin bestehen, dass der Türsensor überbrückt wird, sodass die Tür für die Mikrowelle immer - d.h. auch im offenen Zustand - als geschlossen erkannt wird. Im Überwachungssystem kann als FCS-Parameter im Überwachungsprotokoll hinterlegt sein, dass bei Manipulationserkennung des Türsensors eine entsprechende FCS-Diagnose zu folgendem FCS-Zustand führt: Ausschalten des Magnetrons bis zur Wartung durch Fachpersonal.

Der Türsensorausgang wurde durch Manipulation durch eine feste Brücke nach Versorgungsspannung ersetzt, so dass der µP der Sicherheitssteuerung annimmt, dass die Tür geschlossen ist und das Magnetron betrieben werden kann. Eine Überwachungseinheit des Türsensors kann mittels Vergleich des Sensoreingangs, Sensorausgangs sowie Eingang µP bzw. Betriebszustand des Magnetrons spätestens nach einmaliger Türöffnung die Manipulation feststellen und eine entsprechende FCS-Diagnose an die Zentraleinheit abgeben, die den entsprechenden FCS-Zustand herbeiführt.

### Ausführungsbeispiel: Bohrmaschine

Eine Sicherheitsfunktion der Schutzeinrichtung besteht in einem: Schutz vor unterwarteten Anlauf. Ein sicherer Zustand, ggf. auch ein möglicher FCS-Zustand besteht darin, dass der Motor abgeschaltet wird. Die Schutzeinrichtung umfasst hierzu Betätigungselemente A+B (=zweikanalig), µP, Motoransteuerung.

Eine Manipulation / Angriff kann in einem dauerhaften Brücken eines Betätigungselementes bestehen. Im Überwachungssystem kann als FCS-Parameter im Überwachungsprotokoll hinterlegt sein, dass beim Brücken eines Betätigungselementes eine entsprechende FCS-Diagnose zu folgendem FCS-Zustand führt: Ausschalten des Motors.

### Ausführungsbeispiel: Infotainmentsvstem im Auto

Eine Sicherheitsfunktion der Schutzeinrichtung besteht in einem: Schutz vor Ablenkung des Fahrers durch abgespielte Videos im Frontbereich des Autos. Ein sicherer Zustand, ggf. auch ein möglicher FCS-Zustand besteht darin, das Videoabspielen im Sichtbereich des Fahrers ab einer gewissen Geschwindigkeit zu unterbinden.

Eine Manipulation / Angriff kann in einer falschen Geschwindigkeitsinformation zum Infotainmentsystem bestehen. Sollte nun die übermittelte FCS-Diagnose inkl. der angenommenen Geschwindigkeit des Infotainmentsystems eine Diskrepanz zur FCS-Diagnose des Geschwindigkeitsmessers des Autos festgestellt werden, könnte der FCS-Zustand durch Sperren einer Videoabspielfunktion im Fahrerbereich bei zu hoher Geschwindigkeit hergestellt werden, was identisch mit dem eigentlichen sicheren Zustand der FS wäre. Sollte auch die Überwachungseinheit des Infotainmentsystems angegriffen werden, was durch fehlende oder falsche periodische Zustandsmeldung der Überwachungseinheit erkannt werden würde, könnte der FCS-Zustand ein dauerhaftes Sperren jeglicher Videoabspielfunktion sein, welcher nur durch autorisiertes Fachpersonal (beispielsweise in einer Fachwerkstatt) aufhebbar wäre.

### Ausführungsbeispiel: Industrie mit einem (SCADA-)Steuerungssystem

Ein Angriff auf ein (SCADA-)Steuerungssystem könnte wie im Kernkraftwerksbeispiel über einen USB-Stick, allerdings auch über das Internet oder dem Verwaltungsnetz erfolgen. Die Erkennung und Herstellung des FCS-Zustandes würde mit Hilfe des FCS-Systems erfolgen und wäre technisch vergleichbar mit dem Kernkraftwerk.

### Ausführunasbeispiel: Drohnen

Eine Sicherheitsfunktion der Schutzeinrichtung besteht in einer Vermeidung der Annäherung an einen Flughafen. Ein sicherer Zustand, ggf. auch ein möglicher FCS-Zustand besteht in einer Abschaltung der Flugfähigkeit oder Kursänderung beim Eindringen in einen sicherheitskritischen Abstand zum Flugraum des Flughafens.

Weitere Beispiele für eine Anwendung der Erfindung auf Sicherheitseinrichtungen können im gleichen Sinne dargestellt werden, wobei exemplarisch auch der Bereich Bauindustrie genannt werden kann, in dem vielfältige Schutzeinrichtungen zur Erhöhung der Arbeits- und Betriebssicherheit beim Bau und Überwachung von Bauwerken eingesetzt werden.

Weitere Ausführungsbeispiele können zur Verhinderung von Hackerangriffen auf Staudämme mit dem Ziel, Dörfer oder ganze Städte zu überfluten; auf Ampelsysteme mit dem Ziel, den Stadtverkehr lahmzulegen und Autounfälle (z.B. durch Grünanzeigen an jeder Ampel) hervorzurufen; oder auf die Weichensteuerung von Zügen mit dem Ziel, Züge kollidieren zu lassen, eingesetzt werden.

### Bezugszeichenliste

- 10, 110: Schutzeinrichtung
- 12: Überwachungssensor
- 14: Sicherheitssteuerung
- 16: Aktor
- 20: Maschine
- 30: Überwachungseinheit
- 32: Zentraleinheit
- 34: Kommunikationsnetzwerk
- 40: automatische Distanzkontroll-Schutzeinrichtung
- 42: Abstandssensor als Überwachungssensor
- 44: Raddrehzahlsensor als Überwachungssensor
- 46: Bremsenaktuator
- 48: Antriebsmotor
- 50: Sicherheitssteuerung
- 52: CAN-Bus
- 54: Zentraleinheit
- 56: Überwachungseinheit
- 58: Kommunikationsnetzwerk
- 59: Antriebsstrang
- 60: Fahrzeug mit automatischer Distanzkontroll-Schutzeinrichtung

## Patentansprüche

1. Überwachungssystem für eine sicherheitsgerichtete, mehrere Sicherheitsbauteile umfassende Schutzeinrichtung (10, 40, 110), wobei die Sicherheitsbauteile zumindest einen zum Erzeugen von jeweiligen Sensorsignalen eingerichteten Überwachungssensor (12, 42, 44) und eine mit dem zumindest einen Überwachungssensor (12, 42, 44) verbundene Sicherheitssteuerung (14, 50) umfasst, wobei die Sicherheitssteuerung (14, 50) zum Empfangen und Auswerten der Sensorsignale und zum Erzeugen und Ausgeben von Sicherheitsschaltbefehlen auf der Grundlage der Sensorsignale eingerichtet ist, wobei
das Überwachungssystem zumindest eine Überwachungseinheit (30, 56), welche mit zumindest einem jeweiligen Sicherheitsbauteil verbunden ist und zum Überwachen eines Zustands des Sicherheitsbauteils eingerichtet ist, und eine Zentraleinheit (32, 54) als Komponenten umfasst, wobei die zumindest eine Überwachungseinheit (30, 56) und die Zentraleinheit (32, 54) mittels eines Kommunikationsnetzwerks (34, 58) zum Austausch von Nachrichten untereinander verbunden sind, wobei das Kommunikationsnetzwerk (34, 58) zum Bereitstellen eines Überwachungsprotokolls eingerichtet ist, **dadurch gekennzeichnet, dass** mittels des Überwachungsprotokolls auf der Grundlage der ausgetauschten Nachrichten zumindest ein jeweiliger Zustand eines Sicherheitsbauteils und/oder einer Komponente des Überwachungssystems auf Übereinstimmung oder Abweichung von einem zugeordneten Sollzustand überprüfbar ist, wobei eine von einer Überwachungseinheit (30, 56) ausgesendete Nachricht Informationen über eine Identität der Überwachungseinheit (30, 56) und/oder eines mit der Überwachungseinheit (30, 56) verbundenen Sicherheitsbauteils und/oder über ein Überwachungssignal oder einen Sicherheitsschaltbefehl umfasst, welches oder welcher von einem mit der Überwachungseinheit (30, 56) verbundenen Sicherheitsbauteil erzeugt wurde, und/oder wobei eine von der Zentraleinheit (32, 54) ausgesendete Nachricht ein in einer Überwachungseinheit (30, 56) speicherbares Zertifikat umfasst, welches diese Überwachungseinheit (30, 56) als zulässige Komponente des Überwachungssystems kennzeichnet, und dass das Überwachungsprotokoll eine Blockchain umfasst, wobei alle oder ein Teil der in dem Überwachungssystem übermittelten Nachrichten in der Blockchain gespeichert werden, und wobei die Blockchain oder weitere Instanzen der Blockchain in der Zentraleinheit (32, 54) und zusätzlich zumindest in einem Teil der Überwachungseinheiten (30, 56) gespeichert werden.

2. Überwachungssystem nach Anspruch 1, **dadurch gekennzeichnet, dass** das Überwachungsprotokoll einen jeweiligen innerhalb der zumindest einen Überwachungseinheit (30, 56) und der Zentraleinheit (32, 54) ausführbaren Programmcode umfasst, welcher Ver- und Entschlüsselungsmittel und/oder Signaturmittel und/oder Verifikationsmittel zum Erzeugen, Übermitteln, Empfangen, Auswerten und/oder Speichern der Nachrichten umfasst.

3. Überwachungssystem nach einem der vorhergehenden Ansprüche, **dadurch gekennzeichnet, dass** zumindest ein Teil der Nachrichten verschlüsselt, und insbesondere zusätzlich signiert, übertragen wird, wobei ein Verschlüsseln der Nachrichten bevorzugt mittels eines asymmetrischen Verschlüsselungsverfahrens erfolgt.

4. Überwachungssystem nach einem der vorhergehenden Ansprüche, **dadurch gekennzeichnet, dass** eine in einer Komponente des Überwachungssystems gespeicherte Blockchain oder ein kryptographischer Hash-Wert dieser Blockchain zeitgesteuert, ereignisgesteuert und/oder auf Anforderung durch eine andere Komponente des Überwachungssystems an zumindest eine Komponente des Überwachungssystems übermittelt wird, wobei insbesondere eine von einer Komponente empfangene Blockchain oder ein empfangener kryptographischer Hash-Wert dieser Blockchain mit der in der empfangenden Komponente gespeicherten Blockchain oder einem kryptographischen Hash-Wert der gespeicherten Blockchain verglichen wird.

5. Überwachungssystem nach einem der vorhergehenden Ansprüche, **dadurch gekennzeichnet, dass** die Zentraleinheit (32, 54) und/oder die zumindest eine Überwachungseinheit (30, 56) dazu eingerichtet sind, bei einer festgestellten Abweichung zumindest eines Zustandes von dem zugeordneten Sollzustand,
- einen mit der Überwachungseinheit (30, 56) verbundenen Überwachungssensor (12, 42, 44) derart zu steuern, dass der Überwachungssensor (12, 42, 44) anstelle eines regulären Sensorsignals ein vorgegebenes Alarmierungssensorsignal erzeugt, und/oder
- eine die festgestellte Abweichung signalisierende Nachricht auszusenden, und/oder
- die Sicherheitssteuerung (14, 50) und/oder das damit ausgestattete System in einen vorgegebenen sicheren Zustand zu überführen.

6. Überwachungssystem nach einem der vorhergehenden Ansprüche, **dadurch gekennzeichnet, dass** die Zentraleinheit (32, 54) und/oder die zumindest eine Überwachungseinheit (30, 56) dazu eingerichtet sind, bei einer festgestellten Abweichung zwischen verschiedenen Instanzen der Blockchain
- einen mit der Überwachungseinheit (30, 56) verbundenen Überwachungssensor (12, 42, 44) derart zu steuern, dass der Überwachungssensor (12, 42, 44) anstelle eines regulären Sensorsignals ein vorgegebenes Alarmierungssensorsignal erzeugt, und/oder
- eine die festgestellte Abweichung signalisierende Nachricht auszusenden, und/oder
- die Sicherheitssteuerung (14, 50) und/oder das damit ausgestattete System in einen vorgegebenen sicheren Zustand zu überführen.

7. Überwachungssystem nach einem der vorhergehenden Ansprüche, **dadurch gekennzeichnet, dass** die zumindest eine Überwachungseinheit (30, 56) dazu eingerichtet ist, zyklisch und/oder auf Anforderung durch die Zentraleinheit (32, 54) Nachrichten auszusenden, und dass die Zentraleinheit (32, 54) dazu eingerichtet ist, diese Nachrichten zu empfangen, zumindest für einen jeweiligen Zyklus und/oder innerhalb einer vorgegebenen Zeitdauer nach der Aufforderung die Anzahl und/oder die Reihenfolge der empfangenen Nachrichten zu ermitteln und mit einer vorgegebenen Sollanzahl und/oder einer vorgegebenen Sollreihenfolge zu vergleichen, bei einer festgestellten Abweichung eine die festgestellte Abweichung signalisierende Nachricht auszusenden und insbesondere diese Nachricht in der Blockchain zu speichern, und/oder bei einer festgestellten Abweichung die Sicherheitssteuerung (14, 50) in einen vorgegebenen sicheren Zustand zu überführen.

8. Überwachungssystem nach einem der vorhergehenden Ansprüche, **dadurch gekennzeichnet, dass** das Kommunikationsnetzwerk (34, 58) ein Bussystem, insbesondere ein Feldbussystem, umfasst, wobei insbesondere das Kommunikationsnetzwerk (34, 58) zumindest einen Teil eines Bussystems der Schutzeinrichtung (10, 40, 110), welches die Sicherheitsbauteile miteinander verbindet, umfasst.

9. Überwachungssystem nach einem der vorhergehenden Ansprüche, **dadurch gekennzeichnet, dass** das Überwachungssystem zusätzlich zu einer Überwachungsbetriebsart, in welcher eine Überprüfung eines jeweiliger Zustands auf Übereinstimmung oder Abweichung von einem zugeordneten Sollzustand erfolgt, in einer Konfigurationsbetriebsart betreibbar ist, in welcher zumindest eine Komponente zum Überwachungssystem hinzugefügt, aus dem Überwachungssystem entfernt oder zumindest eine Funktionalität der Komponente konfiguriert und/oder parametriert werden kann.

10. Überwachungssystem nach Anspruch 9, **dadurch gekennzeichnet, dass** nur die Zentraleinheit (32, 54) dafür eingerichtet ist, das Überwachungssystem in die Konfigurationsbetriebsart zu versetzen und/oder in der Konfigurationsbetriebsart zu betreiben, wobei insbesondere die Zentraleinheit (32, 54) dafür eingerichtet ist, das Versetzen des Überwachungssystems in die Konfigurationsbetriebsart nur nach einer positiven Prüfung auf Vorliegen zumindest eines Sicherheitsmerkmals zuzulassen.

11. Sicherheitsgerichtete Schutzeinrichtung (10, 40, 110) mit mehreren Sicherheitsbauteilen, wobei die Sicherheitsbauteile zumindest einen zum Erzeugen von jeweiligen Sensorsignalen eingerichteten Überwachungssensor (12, 42, 44) und eine mit dem zumindest einen Überwachungssensor (12, 42, 44) verbundene Sicherheitssteuerung (14, 50) umfasst, wobei die Sicherheitssteuerung (14, 50) zum Empfangen und Auswerten der Sensorsignale und zum Erzeugen und Ausgeben von Sicherheitsschaltbefehlen auf der Grundlage der Sensorsignale eingerichtet ist, und mit einem Überwachungssystem nach einem der vorhergehenden Ansprüche, wobei zumindest ein Teil der Sicherheitsbauteile mit einer zugeordneten Überwachungseinheit (30, 56) oder der Zentraleinheit (32, 54) verbunden ist.

12. Sicherheitsgerichtete Schutzeinrichtung (10, 40, 110) nach Anspruch 11, **dadurch gekennzeichnet, dass** ein jeweiliges Sicherheitsbauteil und die zugeordnete Überwachungseinheit (30, 56) in einer gemeinsamen Baueinheit integriert sind.

## Claims

1. Monitoring system for a safety-oriented protective device (10, 40, 110) comprising a plurality of safety components, the safety components comprising at least one monitoring sensor (12, 42, 44) configured to generate respective sensor signals and one safety control unit (14, 50) connected to the at least one monitoring sensor (12, 42, 44), the safety control unit (14, 50) being configured to receive and evaluate the sensor signals and to generate and output safety switching commands on the basis of the sensor signals, wherein the monitoring system comprises as components at least one monitoring unit (30, 56), which is connected to at least one respective safety component and is configured to monitor a state of the safety component, and a central unit (32, 54), wherein the at least one monitoring unit (30, 56) and the central unit (32, 54) are connected to one another by means of a communications network (34, 58) for exchanging messages, wherein the communications network (34, 58) is configured to provide a monitoring log, and **characterized in that** by means of the monitoring log and on the basis of the exchanged messages at least one respective state of a safety component and/or of a component of the monitoring system is capable of being checked for correspondence with or deviation from an associated nominal state, a message transmitted by a monitoring unit (30, 56) comprising information on the identity of the monitoring unit (30, 56) and/or of a safety component connected to the monitoring unit (30, 56) and/or on a monitoring signal or safety switching command generated by a safety component connected to the monitoring unit (30, 56), and/or a message transmitted by the central unit (32, 54) comprising a certificate storable in a monitoring unit (30, 56) which identifies this monitoring unit (30, 56) as a permissible component of the monitoring system, and that the monitoring log comprises a blockchain, all or some of the messages transmitted in the monitoring system being stored in the blockchain, and the blockchain or further instances of the blockchain being stored in the central unit (32, 54) and additionally at least in some of the monitoring units (30, 56).

2. Monitoring system according to claim 1, **characterized in that** the monitoring log comprises a respective program code executable in the at least one monitoring unit (30, 56) and the central unit (32, 54), the program code comprising encryption and decryption means and/or signature means and/or verification means for generating, transmitting, receiving, evaluating and/or storing the messages.

3. Monitoring system according to any of the preceding claims, **characterized in that** at least some of the messages are transmitted in encrypted, and in particular additionally signed, form, encryption of the messages preferably being performed by means of an asymmetric encryption method.

4. Monitoring system according to any of the preceding claims, **characterized in that** a blockchain stored in a component of the monitoring system or a cryptographic hash value of this blockchain is transmitted to at least one component of the monitoring system in time-controlled or event-controlled manner or upon request by another component of the monitoring system, in particular a blockchain received by a component or a received cryptographic hash value of this blockchain being compared with the blockchain stored in the receiving component or a cryptographic hash value of the stored blockchain.

5. Monitoring system according to any of the preceding claims, **characterized in that** the central unit (32, 54) and/or the at least one monitoring unit (30, 56) are configured, in the event of an identified deviation of at least one state from the associated nominal state,
- to control a monitoring sensor (12, 42, 44) connected to the monitoring unit (30, 56) in such a way that the monitoring sensor (12, 42, 44) generates a predetermined alerting sensor signal instead of a regular sensor signal, and/or
- to send a message signalling the identified deviation, and/or
- to transfer the safety control unit (14, 50) and/or the system equipped therewith into a predetermined safe state.

6. Monitoring system according to any of the preceding claims, **characterized in that** the central unit (32, 54) and/or the at least one monitoring unit (30, 56) are configured, in the event of an identified deviation between various instances of the blockchain,
- to control a monitoring sensor (12, 42, 44) connected to the monitoring unit (30, 56) in such a way that the monitoring sensor (12, 42, 44) generates a predetermined alerting sensor signal instead of a regular sensor signal, and/or
- to send a message signalling the identified deviation, and/or
- to transfer the safety control unit (14, 50) and/or the system equipped therewith into a predetermined safe state.

7. Monitoring system according to any of the preceding claims, **characterized in that** the at least one monitoring unit (30, 56) is configured to send messages, cyclically and/or on request by the central unit (32, 54), and that the central unit (32, 54) is configured to receive these messages, to determine the number and/or sequence of the received messages at least for a respective cycle and/or within a predetermined period after the request and to compare them with a predetermined nominal number and/or a predetermined nominal sequence, to send a message signalling the identified deviation in the event of a deviation being identified and in particular to store this message in the blockchain, and/or to transfer the safety control unit (14, 50) into a predetermined safe state in the event of a deviation being identified.

8. Monitoring system according to any of the preceding claims, **characterized in that** the communications network (34, 58) comprises a bus system, in particular a field bus system, the communications network (34, 58) in particular comprising at least part of a bus system of the protective device (10, 40, 110) which connects the safety components to one another.

9. Monitoring system according to any of the preceding claims, **characterized in that** the monitoring system is operable, additionally to a monitoring mode in which a respective state is checked for correspondence with or deviation from an associated nominal state, in a configuration mode in which at least one component is added to the monitoring system, is removed from the monitoring system or at least one functionality of the component can be configured and/or parameterized.

10. Monitoring system according to claim 9, **characterized in that** only the central unit (32, 54) is configured to set the monitoring system to the configuration mode and/or operate it in the configuration mode, the central processing unit (32, 54) in particular being configured to allow the monitoring system to be set to the configuration mode only after positive testing for the presence of at least one security feature.

11. Safety-oriented protective device (10, 40, 110) with a plurality of safety components, the safety components comprising at least one monitoring sensor (12, 42, 44) configured to generate respective sensor signals and one safety control unit (14, 50) connected to the at least one monitoring sensor (12, 42, 44), the safety control unit (14, 50) being configured to receive and evaluate the sensor signals and to generate and output safety switching commands on the basis of the sensor signals, and with a monitoring system according to any of the preceding claims, at least some of the safety components being connected to an assigned monitoring unit (30, 56) or the central unit (32, 54).

12. Safety-oriented protective device (10, 40, 110) according to claim 11, **characterized in that** a respective safety component and the associated monitoring unit (30, 56) are integrated into a common module.

## Revendications

1. Système de surveillance pour un dispositif de protection (10, 40, 110) axé sur la sécurité, comprenant plusieurs composants de sécurité, sachant que les composants de sécurité comprennent au moins un capteur de surveillance (12, 42, 44) configuré pour créer des signaux de capteur respectifs, et une commande de sécurité (14, 50) reliée audit au moins un capteur de surveillance (12, 42, 44), sachant que la commande de sécurité (14, 50) est configurée pour la réception et l'évaluation des signaux de capteur et la génération et l'émission de commandes d'activation de sécurité sur la base des signaux de capteur, sachant que le système de surveillance comprend comme composants au moins une unité de surveillance (30, 56) qui est reliée à au moins un composant de sécurité respectif et est configurée pour surveiller un état du composant de sécurité, et une unité centrale (32, 54), sachant que ladite au moins une unité de surveillance (30, 56) et l'unité centrale (32, 54) sont reliées entre elles au moyen d'un réseau de communication (34, 58) pour échanger des messages, sachant que le réseau de communication (34, 58) est configuré pour fournir un compte rendu de surveillance, et **caractérisé en ce qu'**au moyen du compte rendu de surveillance sur la base des messages échangés, au moins un état respectif d'un composant de sécurité et/ou d'une composante du système de surveillance est vérifiable pour constater sa concordance ou son écart par rapport à un état de consigne attribué, sachant qu'un message émis par une unité de surveillance (30, 56) comprend des informations sur une identité de l'unité de surveillance (30, 56) et/ou d'un composant de sécurité relié à l'unité de surveillance (30, 56) et/ou sur un signal de surveillance ou une commande de sécurité qui a été créé(e) par un composant de sécurité relié à l'unité de surveillance (30, 56), et/ou sachant qu'un message émis par l'unité centrale (32, 54) comprend un certificat enregistrable dans une unité de surveillance (30, 56), lequel caractérise cette unité de surveillance (30, 56) comme composante fiable du système de surveillance, et que le compte rendu de surveillance comprend une blockchain, sachant que tous les messages ou une partie des messages transmis dans le système de surveillance sont enregistrés dans la blockchain, et sachant que la blockchain ou d'autres instances de la blockchain sont enregistrées dans l'unité centrale (32, 54) et également au moins dans une partie des unités de surveillance (30, 56).

2. Système de surveillance selon la revendication 1, **caractérisé en ce que** le compte rendu de surveillance comprend un code de programmation respectif, exécutable à l'intérieur de ladite au moins une unité de surveillance (30, 56) et de l'unité centrale (32, 56), lequel comprend des moyens de chiffrement et de déchiffrement et/ou de signature et/ou de vérification pour créer, transmettre, recevoir, évaluer et/ou enregistrer les messages.

3. Système de surveillance selon une des revendications précédentes, **caractérisé en ce qu'**au moins une partie des messages est transmise chiffrée, et notamment également signée, sachant qu'un chiffrement a lieu de préférence au moyen d'un procédé de chiffrement asymétrique.

4. Système de surveillance selon une des revendications précédentes, **caractérisé en ce qu'**une blockchain enregistrée dans une composante du système de surveillance ou une valeur cryptographique de hachage de cette blockchain est transmise en fonction du temps, en fonction d'un événement et/ou sur la demande d'une autre composante du système de surveillance au moins à une composante du système de surveillance, sachant que notamment une blockchain reçue par une composante ou une valeur cryptographique de hachage reçue est comparée à la blockchain enregistrée dans la composante reçue ou à une valeur cryptographique de hachage de la blockchain enregistrée.

5. Système de surveillance selon une des revendications précédentes, **caractérisé en ce que** l'unité centrale (32, 54) et/ou ladite au moins une unité de surveillance (30, 56) est configurée de sorte à réaliser les opérations suivantes, en cas d'écart constaté d'au moins un état par rapport à l'état de consigne attribué :
- commander un capteur de surveillance (12, 42, 44) relié à l'unité de surveillance (30, 56) de sorte que le capteur de surveillance (12, 42, 44) génère un signal de capteur d'alerte prédéfini au lieu d'un signal de capteur ordinaire, et/ou
- émettre un message signalant l'écart constaté, et/ou
- convertir dans un état sûr prédéfini la commande de sécurité (14, 50) et/ou le système qui en est équipé.

6. Système de surveillance selon une des revendications précédentes, **caractérisé en ce que** l'unité centrale (32, 54) et/ou ladite au moins une unité de surveillance (30, 56) est configurée de sorte à réaliser les opérations suivantes, en cas d'écart constaté entre différentes instances de la blockchain :
- commander un capteur de surveillance (12, 42, 44) relié à l'unité de surveillance (30, 56) de sorte que le capteur de surveillance (12, 42, 44) génère un signal de capteur d'alerte prédéfini au lieu d'un signal de capteur ordinaire, et/ou
- émettre un message signalant l'écart constaté, et/ou
- convertir dans un état sûr prédéfini la commande de sécurité (14, 50) et/ou le système qui en est équipé.

7. Système de surveillance selon une des revendications précédentes, **caractérisé en ce que** ladite au moins une unité de surveillance (30, 56) est configurée pour émettre des messages cycliquement et/ou sur la demande de l'unité centrale (32, 54), et que l'unité centrale (32, 54) est configurée pour recevoir ces messages, pour déterminer le nombre et/ou l'ordre des messages reçus au moins pour un cycle respectif et/ou dans une période prédéfinie après la demande et pour comparer avec un nombre de consigne prédéfini et/ou un ordre de consigne prédéfini, pour émettre, en cas d'écart constaté, un message signalant l'écart constaté et notamment pour enregistrer ce message dans la blockchain, et/ou pour faire passer l'unité de sécurité (14, 50) dans un état sûr prédéfini en cas d'écart constaté.

8. Système de surveillance selon une des revendications précédentes, **caractérisé en ce que** le réseau de communication (34, 58) comprend un système de bus, notamment un système de bus de terrain, sachant que notamment le réseau de communication (34, 58) comprend au moins une partie d'un système de bus du dispositif de protection (10, 40, 110), qui relie les composants de sécurité entre eux.

9. Système de surveillance selon une des revendications précédentes, **caractérisé en ce que** le système de surveillance est exploitable dans un mode de surveillance dans lequel une vérification d'un état respectif a lieu pour constater sa concordance ou son écart par rapport à un état de consigne attribué mais aussi dans un mode de configuration dans lequel au moins une composante peut être ajoutée au système de surveillance, retirée du système de surveillance ou qu'au moins une fonctionnalité de la composante peut être configurée et/ou paramétrée.

10. Système de surveillance selon la revendication 9, **caractérisé en ce que** seule l'unité centrale (32, 54) est configurée pour mettre le système de surveillance en mode de configuration et/ou pour l'exploiter en mode de configuration, sachant que notamment l'unité centrale (32, 54) est configurée pour autoriser que le système de surveillance soit mis en mode de configuration uniquement après un contrôle positif montrant la présence d'au moins une caractéristique de sécurité.

11. Dispositif de sécurité (10, 40, 110) axé sur la sécurité avec plusieurs composants de sécurité, sachant que les composants de sécurité comprennent au moins un capteur de surveillance (12, 42, 44) configuré pour générer des signaux de capteur respectifs, et une commande de sécurité (14, 50) reliée audit au moins un capteur de surveillance (12, 42, 44), sachant que la commande de sécurité (14, 50) est configurée pour recevoir et évaluer les signaux de capteur et pour générer et émettre des commandes d'activation de sécurité sur la base des signaux de capteur, et avec un système de surveillance selon une des revendications précédentes, sachant qu'au moins une partie des composants de sécurité est reliée à une unité de surveillance attribuée (30, 56) ou à l'unité centrale (32, 54).

12. Dispositif de sécurité (10, 40, 110) axé sur la sécurité selon la revendication 11, **caractérisé en ce qu'**un composant de sécurité respectif et l'unité de surveillance (30, 56) attribuée sont intégrés dans un module commun.
